# EUROPEAN PATENT APPLICATION

(11) **EP 4 636 002 A1**
(43) Date of publication of application: **22.10.2025**
(21) Application number: 25170251.0
(22) Date of filing: 14.04.2025
(51) Int. Cl.: C08G 18/40, C08G 18/48, C08G 18/63, C08G 18/76

(54) **FILLED POLYOLS AND PROCESSES FOR THE PRODUCTION THEREOF**

(30) Priority: 16.04.2024 US 202463634548 P
(71) Applicant: Covestro LLC, Pittsburgh, PA 15205-9741 (US)
(72) Inventor: ADKINS, Rick, Canonsburg, 15317 (US); HAYES, John, Gibsonia, 15044-6053 (US); MCVEY, Susan, Houston, 15342 (US); PYLES, David, McMurray,(PA), 15317 (US); Walker, Jaime, Pittsburgh, 15243 (US)
(74) Representative: Levpat

(57) **Abstract**

Filled polyols and processes for their production. The filled polyols include a carrier polyol and polymer particles dispersed in the carrier polyol. The carrier polyol includes a polyether polyol having a functionality of 2 to 6, an OH number of 20 to 120 mg KOH/g, and a poly(oxyethylene) content of at least 60% by weight, based on total weight of the polyether polyol. The polymer particles exhibit a multimodal particle size distribution.

## Description

### FIELD

This specification relates to filled polyols, such as polymer polyols ("PMPOs") that include polymer particles dispersed in a carrier polyol, in which the polymer particles exhibit a multimodal particle size distribution and the carrier polyol has a relatively high poly(oxyethylene) content. This specification also relates to processes for producing such filled polyols. The filled polyols s may be used in the production of flexible foams that exhibit high air flow and improved indentation force deflection ("IFD") properties.

### BACKGROUND

Opened-cell flexible polyurethane foams are used in many applications, such as in the production of bedding products, including as mattresses and pillows, furniture, and automotive seating. They are produced by reacting an isocyanate-reactive material, usually polyol, with a polyisocyanate, in the presence of a blowing agent and usually other ingredients, such as catalyst and surfactant. Many types of open-cell flexible foams, such as so-called "hyper-soft" foams, are produced using a relatively high amount, such as 40% or more by weight (based on total weight of polyol) of polyether polyol with a high poly(oxyethylene) content (50% or more by weight, based on total weight of the polyether polyol). The polyurethane foams resulting from such compositions can exhibit high airflow.

A drawback to such foams, however, at least in some applications, is that they tend to exhibit low firmness, which is an indicator of the surface feel of the foam and is measured by IFD. Producing open-cell flexible foams with a combination of high airflow and increased IFD can be challenging. Traditionally, this has been achieved by increasing the isocyanate index of the formulation or by incorporating a filled polyol (a dispersion of solid polymer particles in a carrier polyol) in the formulation. These methods of increasing IFD have, however, led to detrimental effects on airflow characteristics of the foam.

As a result, it would be desirable to provide open-cell flexible polyurethane foams with raised IFD values, while, at the same time, avoiding any significant detrimental impact on other physical properties of the foam, such as airflow. The inventions described in this specification were made in view thereof.

### SUMMARY

In some respects, this specification relates to filled polyols. The filled polyols comprise a carrier polyol and polymer particles dispersed in the carrier polyol. The carrier polyol comprises a polyether polyol having a functionality of 2 to 6, an OH number of 20 to 120 mg KOH/g, and a poly(oxyethylene) content of at least 60% by weight, based on total weight of the polyether polyol. The polymer particles exhibit a multimodal particle size distribution.

In other respects this specification relates to processes for preparing a PMPO. These processes comprise: (a) continuously introducing components comprising (i) a carrier polyol, (ii) an ethylenically unsaturated monomer, (iii) a radical initiator, and (iv) a preformed stabilizer into a continuous reactor, and (b) continuously removing the PMPO from the continuous reactor. In these processes, the carrier polyol comprises a polyether polyol having a functionality of 2 to 6, an OH number of 20 to 120 mg KOH/g, and a poly(oxyethylene) content of at least 60% by weight, based on total weight of the polyether polyol. In addition, the preformed stabilizer comprises a reaction product of a reaction mixture comprising (i) an ethylenically unsaturated macromer, (ii) an ethylenically unsaturated monomer, (iii) a free radical initiator, (iv) a polymer control agent, and optionally (v) a diluent.

This specification also relates to, among other things, use of such filled polyols, such as PMPOs, in the production of flexible foams.

### BRIEF DESCRIPTION OF THE DRAWINGS

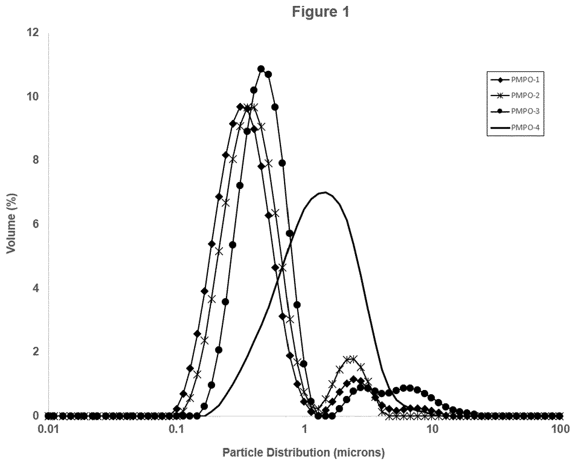

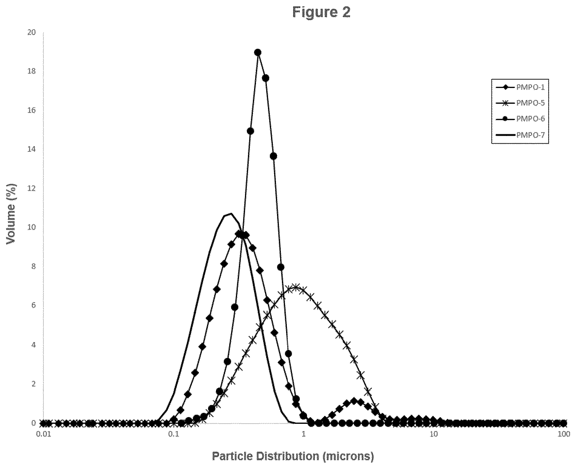

Figures 1 and 2 are particle size distribution curves of the PMPOs of the examples.

### DETAILED DESCRIPTION

Various implementations are described and illustrated in this specification to provide an overall understanding of the structure, function, properties, and use of the disclosed inventions. It is understood that the various implementations described and illustrated in this specification are nonlimiting and non-exhaustive. Thus, the invention is not limited by the description of the various nonlimiting and non-exhaustive implementations disclosed in this specification. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. Therefore, any such amendments comply with the requirements of 35 U.S.C. § 112 and 35 U.S.C. § 132(a). The various implementations disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents, each numerical parameter described in this specification should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material being described. The term "hydroxyl number", as used herein, refers to the number of reactive hydroxyl groups available for reaction, and is expressed as the number of milligrams of potassium hydroxide equivalent to the hydroxyl content of one gram of the polyol, measured according to ASTM D4274-16. The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

As indicated earlier, this specification relates, in some respects, to filled polyols. As will be appreciated, the term "filled polyol" refers to a dispersion of solid polymer particles in a liquid carrier polyol (also referred to herein as a "base" polyol). In some embodiments, the filled polyol has a solids content, *i.e.,* content of solid polymer particles, of 5 to 45% by weight, 5 to 34% by weight, 10 to 30% by weight, or, in some cases, 15 to 25% by weight, based on the total weight of the filled polyol. Moreover, in certain implementations, the filled polyol has a viscosity (in millipascal-seconds (mPa₊s) measured at 25°C on an Anton Paar SVM3000 viscometer) of less than 50,000 mPa.s, such as less than 40,000 mPa.s, less than 30,000 mPa₊s, less than 20,000 mPa₊s or, in some cases, less than 10,000 mPa₊s.

In addition, as indicated earlier, in the filled polyols of this specification, the polymer particles exhibit a multimodal particle size distribution. As used herein, "multimodal particle size distribution" refers to a situation in which a distribution curve of the polymer particle sizes of the filled polyol has at least two maxima. The two peaks of the curve may be of similar or different size, as measured by the particle distribution volume fraction. For example, in some cases, the polymer particles of the filled polyol have a particle size distribution curve (as measured by the particle distribution volume fraction) having two or more peaks in which the first peak is at a particle size of no more than 1 micron, such as at a particle size of 0.1 to 1 micron, 0.2 to 0.8 micron, or, 0.3 to 0.7 micron, and the second peak is at a particle size of more than 1 micron, such as more than 1 to 5 micron.

Specific examples of filled polyols according to this specification are, without limitation, polyisocyanate polyaddition ("PIPA") polyols, polyurea and/or polyhydrazodicarbonamide ("PHD") polyols, and PMPOs. PHD polyols can be produced by in-situ polymerization of an isocyanate or an isocyanate mixture with a diamine and/or hydrazine (or hydrazine hydrate) in the carrier polyol, such as a polyether polyol, such as by the reaction of an isocyanate mixture of 75% to 85% by weight of 2,4-tolylene diisocyanate (2,4-TDI) and 15% to 25% by weight of 2,6-tolylene diisocyanate (2,6-TDI) with a diamine and/or hydrazine hydrate in a polyether polyol produced by alkoxylation of a trifunctional starter (for example glycerol and/or trimethylolpropane). Processes for producing PHD dispersions are described for example in U.S. Pat. Nos. 4,089,835 and 4,260,530, which are incorporated herein by reference. PIPA polyols are polyether polyols modified with alkanolamines by polyisocyanate polyaddition, where the polyether polyol has a functionality of 2.5 to 4.0 and a hydroxyl number of 3 mg KOH/g to 112 mg KOH/g. PIPA polyols are described in detail in GB 2 072 204 A, DE 3103 757 A1 and U.S. Pat. No. 4,374,209 A, which are incorporated herein by reference.

In some implementations, the filled polyol comprises a PMPO. More specifically, in these implementations, the solid polymer particles of the filled polyol comprise a polymer comprising the free radical polymerization reaction product of an ethylenically unsaturated monomer. In some of these embodiments, the filled polyol comprises a reaction product of a reaction mixture comprising: (a) the carrier polyol; (b) an ethylenically unsaturated monomer, (c) a preformed stabilizer, (d) a free radical initiator, and, (e) optionally, a polymer control agent. As used herein, "monomer" means the simple unpolymerized form of a chemical compound having relatively low molecular weight, e.g., acrylonitrile, styrene, methyl methacrylate, and the like. As used herein, "polymerizable ethylenically unsaturated monomer" means a monomer containing ethylenic unsaturation (C=C, i.e., two double bonded carbon atoms) that is capable of undergoing free radically induced addition polymerization reactions. As used herein, "preformed stabilizer" means an intermediate obtained by reacting a macromer containing reactive unsaturation (e.g. acrylate, methacrylate, maleate, etc.) with one or more monomers (i.e. acrylonitrile, styrene, methyl methacrylate, etc.), with and at least one free radical initiator, in the presence of a polymer control agent (PCA) and, optionally, in a diluent.

As indicated, in some aspects, this specification relates to processes for preparing filled polyols, such as PMPOs. These processes comprises "continuously introducing" components to a reactor. As used herein, the term "continuously introducing" refers to a mode of addition of a component in such manner so as to maintain an effective concentration of the component substantially continuously. Component addition may, for example, be truly continuous or it may be in relatively closely spaced increments. The component(s) may also be added incrementally in such a manner that the added material's concentration decreases to essentially zero for some time prior to the next incremental addition. In some implementations, however, it is preferred that a component's concentration be maintained at substantially the same level during the majority of the course of the continuous process of preparing the filled polyol. Incremental addition of component(s) that still results in a filled polyol exhibiting a multimodal particle size distribution, as described above, is still a "continuous introduction" for purposes of this specification.

In some implementations, the processes of this specification comprise continuously introducing a carrier polyol into a continuous reactor. Any type of continuous reactor may be employed, such as, for example, a single stage continuous stirred tank reactor ("CSTR"), a two stage CSTR, a plug flow reactor, or a loop reactor (i.e., a reactor with internal and/or external recycling of substances, optionally with a heat exchanger arranged in the circulation), such as a stream loop reactor, a jet loop reactor, a Venturi loop reactor, a tube reactor configured in loop form with suitable devices for circulating the reaction mixture, or a loop of several tube reactors connected in series or several stirred tanks connected in series.

According to certain processes of this specification, a carrier polyol is continuously introduced to the continuous reactor. More specifically, the carrier polyol continuously introduced to the continuous reactor comprises a polyether polyol having a functionality of 2 to 6, an OH number of 20 to 120 mg KOH/g, and a poly(oxyethylene) content of at least 60% by weight, based on total weight of the polyether polyol. In some implementations, such carrier polyol has a functionality of 2 to 4, 2.5 to 3.5, or, in some cases, 2.8 to 3.2. In addition, in some implementations, such carrier polyol has an OH number of 20 to 100 mg KOH/g, 20 to 50 mg KOH/g, 25 to 50 mg KOH/g, or 30 to 50 mg KOH/g. Also, in some implementations, such carrier polyol has a poly(oxyethylene) content of 60% to 90% by weight, 60 to 80% by weight, or 65 to 75% by weight, based on the total weight of the polyether polyol.

Specific examples of polyether polyols suitable for use as the foregoing carrier polyol include alkylene oxide addition products of starter compounds with Zerewitinoff-active hydrogen atoms. Suitable starter compounds with Zerewitinoff-active hydrogen atoms which are used for the production of such polyether polyols often have a hydroxyl functionality of 2 to 6, 2 to 4, or, in some cases, 3. Specific examples of suitable hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, and condensation products of formaldehyde and phenol or melamine or urea which contain methylol groups. Specific examples of alkylene oxides suitable for preparing such polyether polyols include ethylene oxide ("EO"), propylene oxide ("PO"), 1,2-butylene-oxide or 2,3-butylene oxide and styrene oxide. In some cases, propylene oxide and ethylene oxide are introduced into the reaction mixture individually, in a mixture or successively. If the alkylene oxides are metered in successively, the resulting products contain polyether chains with block structures. Products with ethylene oxide blocks are characterized by increased concentrations of primary end groups. The alkoxylation reaction may be catalyzed using any conventional catalyst including, for example, potassium hydroxide (KOH) or a double metal cyanide (DMC) catalyst.

In some implementations, the carrier polyol comprises a polyether polyol in which a first alkylene oxide, such as propylene oxide, is added, and then a second alkylene oxide, specifically ethylene oxide, is added as a cap, wherein the ethylene oxide cap is present in an amount sufficient to provide a polyether polyol having a poly(oxyethylene) content of at least 60% by weight, 60% to 90% by weight, 60 to 80% by weight, or 65 to 75% by weight, based on the total weight of the polyether polyol.

In some implementations, the foregoing polyether polyol is present in an amount of at least 50% by weight, such as at least 70% by weight, at least 80% by weight, or at least 90% by weight, based on the total weight of carrier polyol. In some implementations, the foregoing polyether polyol is the only carrier polyol used and, as a result, is the only carrier polyol present in the filled polyol.

If desired, however, other carrier polyols, different from the polyether polyol described above, may also be continuously introduced to the continuous reactor. In some implementations, such other carrier polyol(s) may include other polyether polyols that have a functionality of 2 to 8, 2 to 6, or 3 to 6, and an OH number of 20 to 400 mg KOH/g, 20 to 200 mg KOH/g, 20 to 150 mg KOH/g, 20 to 100 mg KOH/g, 20 to 50 mg KOH/g, 25 to 50 mg KOH/g, or 30 to 50 mg KOH/g. In some implementations, however, such other carrier polyols do not have a poly(oxyethylene) content of at least 60% by weight, based on the total weight of the polyether polyol. For example, in some implementations, such other carrier polyols have a poly(oxyethylene) content of less than 60% by weight, less than 50% by weight, less than 40% by weight, less than 30% by weight, or less than 20% by weight, based on the total weight of the polyether polyol.

The processes of this specification comprise continuously introducing an ethylenically unsaturated monomer into the continuous reactor. Suitable ethylenically unsaturated monomers include, but are not limited to, butadiene, isoprene, 1,4-pentadiene, 1,6-hexadiene, 1,7-octadiene, styrene, acrylonitrile, methacrylonitrile, α-methylstyrene, methylstyrene, 2,4-dimethylstyrene, ethyl styrene, isopropylstyrene, butylstyrene, substituted styrenes, such as cyanostyrene, phenylstyrene, cyclohexylstyrene, benzylstyrene, nitrostyrene, N,N-dimethylaminostyrene, acetoxystyrene, including halogenated styrenes, methyl 4-vinylbenzoate, phenoxystyrene, p-vinyl diphenyl sulfide, p-vinylphenyl phenyl oxide, acrylic and substituted acrylic monomers such as acrylic acid, methacrylic acid, methyl acrylate, 2-hydroxyethyl acrylate, 2-hydroxyethyl methacrylate, methyl methacrylate, cyclohexyl methacrylate, benzyl methacrylate, isopropyl methacrylate, octyl methacrylate, ethyl α-ethyoxyacrylate, methyl α-acetoaminoacrylate, butyl acrylate, 2-ethylhexyl acrylate, phenyl acrylate, phenyl methacrylate, N,N-dimethylacrylamide, N,N-dibenzylacrylamide, N-butylacrylamide, methacrylyl formamide, vinyl esters, vinyl ethers, vinyl ketones, vinyl acetate, vinyl alcohol, vinyl butyrate, isopropenylacetate, vinyl formate, vinyl acrylate, vinyl methacrylate, vinyl methoxy acetate, vinyl benzoate, vinyl toluene, vinyl naphthalene, vinyl methyl ether, vinyl ethyl ether, vinyl propyl ethers, vinyl butyl ethers, vinyl 2-ethylhexyl ether, vinyl phenyl ether, vinyl 2-methoxyethyl ether, methoxybutadiene, vinyl 2-butoxyethyl ether, 3,4-dihydro-1,2-pyran, 2-butoxy-2'-vinyloxy diethylether, vinyl 2-ethylmercaptoethyl ether, vinyl methyl ketone, vinyl ethyl ketone, vinyl phenyl ketone, vinyl ethyl sulfide, vinyl ethyl sulfone, N-methyl-N-vinyl acetamide, N-vinylpyrrolidone, vinyl imidazole, divinyl sulfide, divinyl sulfoxide, divinyl sulfone, sodium vinyl imidazole, divinyl sulfide, divinyl sulfoxide, divinyl sulfone, sodium vinyl sulfonate, methyl vinyl sulfonate, N-vinyl pyrrole, dimethyl fumarate, dimethyl maleate, maleic acid, crotonic acid, fumaric acid, itaconic acid, monomethyl itaconate, t-butylaminoethyl methacrylate, dimethylaminoethyl methacrylate, glycidyl acrylate, ally alcohol, glycol monoesters of itaconic acid, vinyl pyridine, maleic anhydride, maleimide, N-substituted maleimides, such as N-phenylmaleimide. In some implementations, the ethylenically unsaturated monomers comprise styrene and acrylonitrile, such as where the weight ratio of styrene to acrylonitrile (S:AN) is within the range of 80:20 to 20:80, such as 75:25 to 25:75, 50:50 to 30:70, or 45:55 to 35:65.

The amount of ethylenically unsaturated monomer(s) fed to the continuous reactor is selected to achieve the desired polymer solids content in the final PMPO product. The solids level may range, for example, from 5 to 45% by weight, 5 to 34% by weight, 10 to 30% by weight, or, in some cases, 15 to 25% by weight, based on the total weight of all components used to prepare the PMPO. If a lower solids content PMPO is desired, the solids content may be lowered by dilution of the higher solids PMPO with further amounts of carrier polyol or other non-PMPO, or by blending with a PMPO of lesser solids content.

The processes of this specification comprise continuously introducing a radical initiator into the continuous reactor. Suitable radical initiators are the free radical type of vinyl polymerization initiators, such as the peroxides and azo compounds. Specific examples of such initiators include 2,2'-azo-bis-isobutyronitrile (AIBN), dibenzoyl peroxide, lauroyl peroxide, di-t-butyl peroxide, diisopropyl peroxide carbonate, t-butyl peroxy-2-ethylhexanoate, t-butylperneodecanoate, t-butylperbenzoate, t-butyl percrotonate, t-butyl perisobutyrate, di-t-butyl perphthalate and 2,2'-azo-bis(2-methylbutane-nitrile) available from DuPont as VAZO 67.

The amount of radical initiator introduced to the continuous reactor can be varied. In some implementations, the amount of radical initiator introduced is 0.01 to 5.0 % by weight, based on the total weight of the components used to produce the PMPO. The free radical initiator and temperature should be selected so that the initiator has a reasonable rate of decomposition with respect to the hold-up time in the continuous reactor.

Some implementations of the processes of this specification comprise continuously introducing a preformed stabilizer into the continuous reactor. More specifically, the preformed stabilizer continuously introduced to the continuous reactor comprises a reaction product of a reaction mixture comprising: (1) a macromer that contains reactive unsaturation, (2) an ethylenically unsaturated monomer, (3) a free radical initiator, (4) a polymer control agent ("PCA"); and, in some cases, (5) a diluent.

In some implementations, the macromer utilized to produce the preformed stabilizer comprises a reaction product of a reaction mixture comprising: (i) an H-functional starter having a functionality of 2 to 8 and a hydroxyl number of 20 to 50; (ii) 0.1 to 3% by weight, based on 100% by weight of the sum of components (i), (ii) and (iii), of a hydroxyl-reactive compound that contains reactive unsaturation; and (iii) 0 to 3% by weight, such as 0.05 to 2.5% by weight, or 0.1 to 1.5% by weight, based on 100% by weight of the sum of components (i), (ii) and (iii), of a diisocyanate.

Suitable preformed stabilizers can be prepared by reacting a combination of components (1), (2), (3) and (4), and optionally, (5), as described above, in a reaction zone maintained at a temperature sufficient to initiate a free radical reaction, and under sufficient pressure to maintain only liquid phases in the reaction zone, for a sufficient period of time to react component (1), (2) and (3) described above and recovering a mixture containing the preformed stabilizer dispersed in the PCA.

Suitable starters (i) for use in preparing the macromer include compounds having a hydroxyl functionality of 2 to 8, such as 3 to 6, and a hydroxyl number of 20 to 50 mg KOH/g or 25 to 40, mg KOH/g. A specific example of a suitable such starter is an alkylene oxide adduct of a hydroxyl functional compound, such as ethylene glycol, propylene glycol, diethylene glycol, dipropylene glycol, tripropylene glycol, glycerin, trimethylolpropane, pentaerythritol, sorbitol, ethylenediamine, and toluene diamine, among others, including mixtures of any two or more thereof, in which the alkylene oxide comprises, for example, propylene oxide, ethylene oxide, butylene oxide, or styrene oxide, among others, including mixtures of any two or more thereof, such as a mixture of propylene oxide and ethylene oxide. Such mixtures may be added simultaneously (*i.e.* two or more alkylene oxide are added as co-feeds), or sequentially (one alkylene oxide is added first, and then another alkylene oxide is added), or a combination of simultaneously and sequentially. In some implementations, a first alkylene oxide, such as propylene oxide, is added, and then a second alkylene oxide, such as ethylene oxide, added as a cap.

Other examples of suitable starters for preparing the macromer are polyoxyethylene glycols, triols, tetrols and higher functionality polyols, and mixtures thereof, as well as alkylene oxide adducts of non-reducing sugars and sugar derivatives, alkylene oxide adducts of phosphorus and polyphosphorus acids, alkylene oxide adducts of polyphenols, polyols prepared from natural oils such as castor oil and alkylene oxide adducts of polyhydroxyalkanes other than those described above. Illustrative alkylene oxide adducts of polyhydroxyalkanes include, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4- 1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol. Specific examples of alkylene oxide adducts of non-reducing sugars are those where the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol, glycoside, propylene glycol glucoside, glycerol glucoside, and 1,2,6-hexanetriol glucoside, and alkylene oxide adducts of the alkyl glycosides. Other suitable polyols starters for preparing the macromer include polyphenols, such as alkylene oxide adducts thereof, wherein the alkylene oxides have from 2 to 4 carbon atoms. Suitable polyphenols include, for example bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis (hydroxyphenol)ethanes.

In some cases, the starter used to prepare the macromer has a functionality of 3 to 6 and a hydroxyl number of 25 to 40 mg KOH/g, and is prepared by reacting a starter, such as glycerin, trimethylolpropane, pentaerythritol, dipentaerythritol, sorbitol, mannitol, or a mixture of any two or more thereof, with an alkylene oxide comprising propylene oxide and/or ethylene oxide. In some of these embodiments, ethylene oxide is utilized in an amount of 1 to 40% by weight, such as 5 to 30% by weight or 10 to 25% by weight, based on the total weight of the starter used. The ethylene oxide can be added as an internal block, as a random cofeed with another oxide, or as a terminal block (i.e. a "cap"). In some embodiments, all or a portion of the ethylene oxide is added as a cap on the end of the starter compound. In some cases, the amount of ethylene oxide added as a cap is, for example, 1 to 40% by weight, 3 to 30% by weight or 5 to 25% by weight, based on the total weight of starter.

As indicated earlier, in some implementations, the reaction mixture used to produce the macromer utilized to produce the preformed stabilizer also comprises a hydroxyl-reactive compound that contains reactive unsaturation. Suitable such compounds include, for example, methyl methacrylate, ethyl methacrylate, maleic anhydride, isopropenyl dimethyl benzyl isocyanate, 2-isocyanatoethyl methacrylate, adducts of isophorone diisocyanate and 2-hydroxyethyl methacrylate, and adducts of toluenediisocyanate and 2-hydroxypropyl acrylate, among others, including mixtures of any two or more thereof.

As also indicated earlier, in some implementations, the reaction mixture used to produce the macromer utilized to produce the preformed stabilizer may also comprise a diisocyanate. Suitable diisocyanates include various isomers of diphenylmethane diisocyanate and isomeric mixtures of diphenylmethane diisocyanate, such as, for example, mixtures of 2,4'-diphenylmethane diisocyanate, 4,4'-diphenylmethane diisocyanate and/or 2,2'-diphenyl-methane diisocyanate. Other suitable isocyanates include toluenediisocyanate, isophoronediisocyanate, hexamethylenediisocyanate, and 4,4'-methylenebis(cyclohexyl isocyanate), among others, includes mixtures of any two or more thereof.

In certain implementations, the macromer is used in an amount of 10 to 40% by weight, such as 15 to 35% by weight, based on the total weight of the reaction mixture used to produce the preformed stabilizer.

As previously mentioned, the reaction mixture used to form the preformed stabilizer that is subsequently continuously introduced to the continuous reactor to produce the PMPO also comprises an ethylenically unsaturated monomer. Suitable such ethylenically unsaturated monomers are aliphatic conjugated dienes, such as butadiene and isoprene, monovinylidene aromatic monomers such as styrene, α-methylstyrene, (t-butyl)styrene, chlorostyrene, cyanostyrene and bromostyrene, α,β-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-dimethylaminomethyl)acryl-amide, vinyl esters, such as vinyl acetate; vinyl ethers, vinyl ketones, vinyl and vinylidene halides, as well as a wide variety of other ethylenically unsaturated materials which are copolymerizable with the macromer, including mixture of any two or more thereof.

In some implementations, the ethylenically unsaturated monomer present in the reaction mixture used to form the preformed stabilizer comprises a mixture of acrylonitrile and at least one other ethylenically unsaturated comonomer which is copolymerizable with acrylonitrile, such as, for example, styrene and its derivatives, acrylates, methacrylates, such as methyl methacrylate, vinylidene chloride, among others, as well as mixtures of any two or more thereof. When using acrylonitrile with a comonomer, it is sometimes desirable that a minimum of 5 to 15% by weight acrylonitrile be maintained in the system. One specific ethylenically unsaturated monomer mixture suitable for making the preformed stabilizer comprises a mixture of acrylonitrile and styrene in which, for example, acrylonitrile is used in an amount of 20 to 80% by weight, such as 30 to 70% by weight, based on the total weight of the monomer mixture, and styrene is used in an amount of 80 to 20% by weight, such as 70 to 30% by weight percent, based on the total weight of the monomer mixture.

In certain implementations, the ethylenically unsaturated monomer is used in an amount of 10 to 30% by weight, such as 15 to 25% by weight, based on the total weight of the reaction mixture used to produce the preformed stabilizer.

The reaction mixture used to produce the preformed stabilizer also includes a free radical initiator. Suitable free-radical initiators include peroxides, including both alkyl and aryl hydro-peroxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile). Representative examples of useful initiators species include t-butyl peroxy-2-ethyl-hexanoate, t-butylperpivalate, t-amyl peroctoate, 2,5-dimethyl-hexane-2,5-di-per-2-ethyl hexoate, t-butylperneodecanoate, and t-butylperbenzoate, as well as azo compounds, such as azobis-isobutyronitrile, 2,2'-azo bis-(2-methylbutyro-nitrile), and mixtures thereof.

In some implementations, the free radical initiator is used in an amount of 0.01 to 2% by weight, such as 0.05 to 1% by weight or 0.05 to 0.3% by weight, based on the total weight of the reaction mixture used to produce the preformed stabilizer.

The reaction mixture used to produce the preformed stabilizer, in some implementations, also includes a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and mixtures of any two or more thereof. Other suitable polymer control agents are ethylbenzene and toluene.

In certain implementations, the polymer control agent is used in an amount of 30 to 80% by weight or 40 to 70% by weight, based on the total weight of the reaction mixture used to produce the preformed stabilizer.

As previously indicated, the reaction mixture used to produce the preformed stabilizer may also include a diluent, such as alkylene oxide adducts having a hydroxyl functionality of greater 2. In some implementations, the diluent is the same as or similar to the polyol used in the formation of precursor used to prepare the preformed stabilizer. In certain implementations, the diluent is used in an amount of 0 to 40% by weight, such as 0 to 20% by weight, or, in some cases, 0 to 10% by weight, based on the total weight of the reaction mixture used to produce the preformed stabilizer.

The preformed stabilizer can be produced by a process similar to that of making the PMPO. The temperature range is not critical and may vary from, for example, 80°C to 150°C, such as 115°C to 125°C. The mixing conditions employed can, for example, be those obtained using a back mixed reactor.

The PMPO production process of this specification is continuous. Such a continuous process may be implemented, for example, using a two-stage reaction system comprising a CSTR fitted with impeller(s) and baffles (first-stage) and a plug-flow reactor (second stage). A typical reaction system may be equipped with any combination of jacket/half-coil, internal coil/tubes or external loop/cooler to remove the heat of reaction. Furthermore, the reaction system can utilize a wide range of mixing conditions. The reaction system may be characterized by energy inputs of from at least about 0.5, or from at least about 2 horsepower. The reaction system may also be characterized by energy inputs of no more than about 350, or of no more than about 50 horsepower. For example, in some implementations, the energy inputs may be 0.5 to 350 horsepower per 1000 gallons or 2 to 50 horsepower per 1000 gallons on average for the bulk phase volume of each reactor. Mixing can be provided by any combination of impeller(s) and pump-around loop/jet mixing. As will be appreciated, the optimum energy input will most likely vary with the dispersion stability and the molecular weight of the base polyether polyol, e.g., a greater amount of energy is preferred for products with higher viscosities. In addition, the processes of this specification may employ various types and combinations of axially and/or radially/tangentially acting impellers including, but not limited to, 4-pitched-blade, 6-pitched-blade, 4-flat-blade, 6-flat-blade, pitched-blade turbine, flat-blade turbine, Rushton, and Maxflow propellers, among others. For the continuous production process to prepare PMPO of this specification, a residence time ranging of 20 to 180 minutes for the first reactor may be particularly useful. For a multistage reactor system, total residence time is additive based on the number of reactors. In some implementations, the reactants are pumped from feed tanks through an in-line static mixer, and then, through a feed tube into the reactor. In some cases, it may be particularly useful to prepare a premix of the initiator with part of the polyol stream, as well as of polyol and preformed stabilizer.

In some cases, reactant feed stream temperatures are ambient (i.e. 25°C). If desired, however, feed streams can be heated to at least 25°C prior to mixing and entering the reactor. Other process conditions, which may be useful, include cooling of the feed tube in the reactor. Furthermore, the suitable reaction conditions for the processes described herein may be characterized by a reaction temperature in the range of 80 to 200°C and a pressure in the range of 20 to 80 psig.

In some cases, the product PMPO can then treated in a single or multi staged stripping step to remove volatiles before entering a stage, which can essentially be any combination of filtration and/or product cooling. In the present case, the wt.-% total polymer in the product was calculated from the concentrations of monomers measured in the crude PMPO before stripping.

In some implementations of the processes of this specification, the PMPO is produced by utilizing a low monomer to polyol ratio which is maintained throughout the reaction mixture during the process. This can be achieved by employing conditions that provide rapid conversion of monomer to polymer. In practice, a low monomer to polyol ratio can be maintained by control of the temperature and mixing conditions.

The PMPO reaction temperature, in some implementations, is at least 80°C, at least 90°C, or at least 110°C. The PMPO reaction temperature may also be no more than 200°C, no more than 150°C, or, in some cases, no more than 130°C. As indicated earlier, it may be desirable that the catalyst and temperature are selected such that the catalyst has a reasonable rate of decomposition with respect to the hold-up time in the continuous reactor.

In some implementations, the processes of this specification comprise: (1) providing a heterogeneous mixture of preformed stabilizer and, optionally, a chain transfer agent, in combination with carrier polyol, ethylenically unsaturated monomer, and free radical initiator, (2) introducing the heterogeneous mixture to a reaction zone maintained at a temperature sufficient to initiate a free radical reaction, and under sufficient pressure to maintain only liquid phases in the reaction zone, (3) maintaining the heterogeneous mixture in the reaction zone for a period of time sufficient to react at least a major portion of the ethylenically unsaturated monomer to form a heterogeneous mixture containing enhanced PMPO, unreacted monomers and chain transfer agent, and (4) stripping the unreacted monomers and diluent from the enhanced PMPO to recover the unreacted monomers and diluent. The mixing conditions employed in the reaction zone are similar to those previously disclosed for a preformed stabilizer. The actual conditions may vary depending on the optimum conditions for a particular PMPO to be produced.

Following polymerization, the PMPO is continuously removed from the continuous reaction and, in some implementations, volatile constituents, such as those from the PCA and residues of monomers, are stripped from the product by, for example, vacuum distillation, optionally in a thin layer of a falling film evaporator. The resulting essentially monomer-free product may be used as is, or may be filtered to remove any large particles that may have been created.

It was discovered, surprisingly, that the processes described in this specification are capable of producing PMPOs that exhibit a multimodal particle size distribution. As a result, this specification is also directed to the filled polyols comprising a carrier polyol and polymer particles dispersed in the carrier polyol, in which the carrier polyol comprises a polyether polyol having a functionality of 2 to 6, an OH number of 20 to 120 mg KOH/g, and a poly(oxyethylene) content of at least 60% by weight, based on total weight of the polyether polyol, and the polymer particles, such as the reaction product of ethylenically unsaturated monomer(s) described earlier, exhibit a multimodal particle size distribution.

In some implementations, the filled polyol contains a larger fraction of smaller particles to larger particles. Thus, in these cases, the volume fraction of particles having a particle size falling within the first peak is at least 50% by volume, such as 50 to 90% by volume, 60 to 90 % by volume or 70 to 90% by volume, based on the total volume of particles in the filled polyol. In these cases, the volume fraction of particles having a particle size falling within the second peak is no more than 50% by volume, such as 10 to 50% by volume, 10 to 40% by volume, or 10 to 30% by volume, based on the total volume of particles in the filled polyol.

The particle sizes and their distribution can be measured by means of either dynamic light scattering and laser Frauenhofer diffraction. The ratio, stated in % by volume, of small to large particles is taken from the cumulative undersize plot.

For purposes of this specification, the determination of the particle size distributions is carried out using a laser particle analyzer from Malvern under the following conditions: Apparatus: Laser Particle Analyzer Mastersizer 3000 Hydro MV (Malvern). Measuring range: from 0.01 µm to 3000 µm; Measuring liquid: 2-Propanol Liquid refractive index: 1.390 @ 25°C. Real part of sample (PMPO) refractive index: 1.56. Imaginary part of sample refractive index: 0. Sample preparation: approximately 0.1 ml of polyol is added to 5 ml of isopropanol (2-propanol) in a 20 ml sample vial by means of a glass Pasteur pipette. The sample is capped and stirred thoroughly. This prepared sample is then added dropwise to the dispersion MV unit of the measuring apparatus until obscuration is between 3-5% which is the amount of laser light lost due to the introduction of the sample into the analyzer beam. After the detector energy reduces in fluctuation to approximately -15 and 15%, usually about 10 minutes, the measurement is then started. The software uses Mie theory and the Beer-Lambert law to calculate the concentration of the samples.

The filled polyols of this specification are suitable for the preparation of polyurethane foams and elastomers. In some implementations, they may be particularly useful for producing flexible foams. Moreover, but without being bound by any theory, it is currently believed that the foregoing multimodal particle size distribution, combined with the particular carrier polyol employed that has a relatively high poly(oxyethylene) content, can enable the production of opened-cell flexible polyurethane foams with raised IFD values, while, at the same time, avoiding any significant detrimental impact on other physical properties of the foam, such as airflow.

The term "flexible foam", as used herein, refers to foams that have a ratio of tensile strength to compressive strength (25% deflection) of at least 15:1, such as 15 to 70:1, or, in some cases 15 to 60:1, as set forth in "Polyurethanes: Chemistry and Technology, Part II Technology," J. H. Saunders & K. C. Frisch, Interscience Publishers, 1964, page 117. In addition, in some implementations, the flexible foam also has a % elongation of at least 100%, such as at least 130%, at least 150%, or, in some cases at least 200%. Moreover, in some implementations, the flexible foams have a CFD 65% compression force deflection of 1.5 to 10 psi, such as 1.5 to 8 psi, or, in some cases, 1.5 to 6 psi. All of the foregoing property testing of flexible foams for purposes of the present invention is done in accordance with ASTM D3574-11. By contrast, as will be appreciated, a rigid foam is characterized as having a ratio of compressive strength to tensile strength of at least 0.5:1, elongation of less than 10%, as well as a low recovery rate from distortion and a low elastic limit, as described in "Polyurethanes: Chemistry and Technology, Part II Technology," J. H. Saunders & K. C. Frisch, Interscience Publishers, 1964, page 239.

More specifically, in some implementations, the flexible foams can be "hyper-soft" foams. As used herein, a "hyper-soft" foam is a foam that exhibits an IFD of no more than 20 lb/50in² and an airflow of at least 6 ft³/min, each measured according to ASTM D3574-17. In some implementations, the flexible foams can be a "viscoelastic" foam. As used herein, a "viscoelastic" foam is a foam that exhibits a recovery rate of at least 3 seconds, wherein "recovery rate" refers to the 95% height recovery time as described in ASTM D 3571-11 Test M. In other embodiments, the foam may exhibit a recovery rate of less than 3 seconds, which indicates a fast recovering foam, such as is observed for "resilient" foams.

The flexible foams, in some implementations, may have a density, measured according to ASTM D1622-14, of no more than 4 lb/ft³ (no more than 64 kg/m³), such as 1 to 4 lb/ft³ (16 to 64 kg/m³), 1 to 3 lb/ft³ (16 to 48 kg/m³), or 1.5 to 2.5 lb/ft³ (24 to 40 kg/m³).

The flexible foams are produced from a polyurethane foam-forming composition that comprises a polyisocyanate. As used herein, the term "polyisocyanate" encompasses diisocyanates as well as higher functionality polyisocyanates.

Any known organic isocyanate, modified isocyanate or isocyanate-terminated prepolymer made from any known organic isocyanate may be used. Suitable organic isocyanates include aromatic, aliphatic, and cycloaliphatic polyisocyanates. Useful polyisocyanates include: diisocyanates, such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclo-hexane diisocyanate, isomers of hexahydro-toluene diisocyanate, isophorone diisocyanate, dicyclo-hexylmethane diisocyanate, 1,5-naphthylene diisocyanate, 4,4-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenyl propane-4,4'-diisocyanate; triisocyanates, such as 2,4,6-toluene triisocyanate; and higher functionality polyisocyanates, such as 4,4'-dimethyl-diphenylmethane 2,2',5,5'-tetraisocyanate and polymethylene polyphenyl-polyisocyanates.

Undistilled or crude polyisocyanates may also be used. Crude toluene diisocyanate obtained by phosgenating a mixture of toluene diamines and the crude diphenylmethane diisocyanate obtained by phosgenating crude diphenylmethanediamine (polymeric MDI) are examples of suitable crude polyisocyanates.

Modified polyisocyanates may also be used. Useful modified polyisocyanates include, but are not limited to, those containing ester groups, urea groups, biuret groups, allophanate groups, carbodiimide groups, isocyanurate groups, uretdione groups and/or urethane groups. Examples of modified polyisocyanates include prepolymers containing NCO groups and having an NCO content of 25 to 35 weight percent, such as 29 to 34 weight percent (according to method MDI-01-01), and/or an isocyanate functionality of 2.2 to 3.2, such as 3.0 to 3.2 such as those based on a polyether polyol or polyester polyol and diphenylmethane diisocyanate.

In certain implementations, the polyisocyanate comprises a mixture of 2,4- and 2,6-toluene diisocyanate, such as a mixture of 79.5 to 81.5 weight percent 2,4-toluene diisocyanate and 18.5 to 20.5 weight percent of 2,6-toluene diisocyanate.

In the foam-forming composition, the polyisocyanate is often present in an amount sufficient to provide an isocyanate index of 70 to 130, such as 80 to 120, 90 to 110, or, in some cases, 95 to 100. As will be appreciated by the ordinarily skilled artisan, "isocyanate index" refers to the molar ratio of isocyanate groups to hydroxyl groups present in the foam-forming composition, multiplied by 100.

The foam-forming composition also includes a polyol composition. More particularly, in some cases, the polyol composition has a weight average hydroxyl functionality of 2 to 4, 2.5 to 3.5, or, in some cases, 2.5 to 3. In addition, the polyol composition, in some cases, has weight average a weight average OH number of 20 to 120 mg KOH/g polyol, such as 20 to 100 mg KOH/g polyol, 20 to 80 mg KOH/g polyol, or, in some cases, 40 to 80 mg KOH/g polyol. Also, in some implementations, the polyol composition has a poly(oxyethylene) content of at least 35% by weight, such as 40 to 80% by weight, 40 to 60% by weight, or, in some cases 50 to 60% by weight, based on the total weight of polyol in the polyurethane foam-forming composition.

The polyol composition includes a filled polyol of this specification. In some implementations, such filled polyol is present in an amount of at least 5% by weight, such as at least 10% by weight, 10 to 90% by weight, or, in some cases, 10 to 50% by weight, based on total weight of polyol in the polyurethane foam-forming composition. In some implementations, such filled polyol is present in an amount such that solid polymer particles are present in an amount of at least 1% by weight, such as 1 to 20% by weight, or 5 to 20% by weight, based on total weight of polyol in the polyurethane foam-forming composition.

The polyol composition may include other polyols besides the filled polyol. For example, in some implementations, the polyol composition may also include a polyether polyol having a functionality of greater than 2, such as greater than 2 up to 6, such as 3 to 6, 3 to 5, 3 to 4, or 3; an oxyethylene content of 0 to 50 wt. %, such as 1 to 25 wt % or 10 to 30 wt %; more than 50 mol %, such as 80 to 90 mole %, of primary OH groups; and an OH number of 8 to 112 mg KOH/g, such as 20 to 50 mg KOH/g or 25 to 35 mg KOH/g.

Suitable polyether polyols include alkylene oxide addition products of starter compounds with Zerewitinoff-active hydrogen atoms that often have a hydroxyl functionality of 2 to 6, in some cases 3. Specific examples of suitable hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, and condensation products of formaldehyde and phenol or melamine or urea which contain methylol groups.

Specific examples of alkylene oxides suitable for preparing such polyether polyols include ethylene oxide, propylene oxide, 1,2-butylene-oxide or 2,3-butylene oxide and styrene oxide. In some cases, propylene oxide and ethylene oxide are introduced into the reaction mixture individually, in a mixture or successively. If the alkylene oxides are metered in successively, the resulting products contain polyether chains with block structures. Products with ethylene oxide blocks are characterized by increased concentrations of primary end groups.

In some implementations, the foregoing polyether polyol having a functionality of greater than 2, an oxyethylene content of 0 to 50 wt. %, more than 50 mol % of primary OH groups, and an OH number of 8 to 112 mg KOH/g is present in an amount of up to 50% by weight, such as 1 to 50% by weight, 10 to 50% by weight, or, in some cases, 10 to 30% by weight, based on the total weight of polyol present.

In some implementations, the foregoing polyether polyol having a functionality of greater than 2, an oxyethylene content of 0 to 50 wt. %, more than 50 mol % of primary OH groups, and an OH number of 8 to 112 mg KOH/g is present as a carrier polyol for a filled polyol, such as a PMPO. Such a filled polyol, or PMPO, is of course therefore a different filled polyol, or PMPO, than the PMPOs described earlier in this specification.

In addition, in some implementations, the polyol composition may comprise a polyether polyol introduced to the composition separately from the filled polyol, *i.e.,* not a component of a filled polyol, with a functionality of 2 to 6, such as 3, an oxyethylene content of at least 60% by weight or at least 70% by weight; at least 50 mol %, such as 50 to 60 mole %, of primary OH groups; and a hydroxyl number of 10 to 112 mg KOH/g, such as 30 to 50 mg KOH/g. Such polyether polyols can include alkylene oxide addition products of starter compounds as described earlier with respect to the carrier polyol of the filled polyol(s) present in the foam-forming compositions. In some implementations, such polyether polyol is present in an amount of at least 5% by weight, such as at least 10% by weight, 10 to 90% by weight, or, in some cases, 10 to 50% by weight, based on total weight of polyol in the polyurethane foam-forming composition.

In addition, in some implementations, the foam-forming compositions may include a compound, different from any of the polyols described above, with at least two isocyanate-reactive hydrogen atoms and with a molecular weight from 62 to 399. Examples of such suitable compounds include, but are not limited to, ethylene glycol, propylene glycol-(1,2) and -(1,3), butylene glycol-(1,4) and -(2,3), pentanediol-(1,5), hexanediol-(1,6), octanediol-(1,8), neopentylglycol, 1,4-bis-hydroxymethyl-cyclohexane, 2-methyl-1,3-propanediol, dibromobutenediol, glycerol, trimethylolpropane, hexanetriol-(1,2,6), trimethylolethane, pentaerythritol, quinitol, mannitol, sorbitol, castor oil, diethylene glycol, triethylene glycol, tetraethyleneglycol, higher polyethylene glycols having a molecular weight of up to 399, dipropylene glycol, higher polypropylene glycols having a molecular weight of up to 399, dibutylene glycol, higher polybutylene glycols having a molecular weight of up to 399, 4,4'-dihydroxy-diphenylpropane, dihydroxymethyl-hydroquinone, ethanolamine, diethanolamine, N-methyldiethanolamine, triethanolamine and 3-aminopropanol.

In some implementations, however, the polyol composition comprises no more than 10% by weight, no more than 5% by weight, no more than 2% by weight, or, in some cases, no more than 1% by weight, based on the total weight of polyol, of a polyol having an OH number greater than 120 mg KOH/g.

The foam-forming compositions also comprise a blowing agent. Suitable blowing agents include chemical blowing agents, *i.e.,* isocyanate reactive agents that generate blowing gases, such as is the case with water and formic acid, as well as physical blowing agents, such as acetone, methylene chloride, carbon dioxide, chlorofluorocarbons ("CFCs"), highly fluorinated and/or perfluorinated hydrocarbons, chlorinated hydrocarbons, hydrofluoroolefins ("HFOs"), such as hydrofluorochloroolefins, hydrocarbons such as propane, butane, pentane, and hexane, and acetals such as methylal.

The amount of blowing agent or blowing agent mixture used may range from 0.5 to 20% by weight, based on total weight of the isocyanate-reactive component. In some instances, the amount of blowing agent may be at least 0.5% or at least 0.75% by weight, based on 100% by weight of the isocyanate-reactive component. The amount of blowing agent present may also be 20% or less, or 10% by weight or less, based on 100% by weight of the isocyanate-reactive component.

When water is the blowing agent, the amount of water is often present in an amount of 0.5 to 10% by weight, based on total weight of the isocyanate-reactive component. In some instances, the amount of water may be at least 0.5% or at least 0.75% by weight, based on total weight of the isocyanate-reactive component. The amount of water present as a blowing agent may also be 10% or less, or 7% by weight or less, based on total weight of the isocyanate-reactive component.

In some implementations, water may be used along with pressurized carbon dioxide that is dispersed in the polyol or resin blend and frothed by passing through a pressure let down device such as employed for example in the Henecke Novaflex, CarDio (Cannon Viking Limited) and Beamech (CO-2) machines. In some implementations, water is essentially the sole blowing agent employed and, as a result, in these implementations, the polyurethane foam-forming composition is substantially free of physical blowing agents, such as CFCs, HCFCs, HFCs and/or HFOs (such as HCFOs), and hydrocarbons, among others. As used herein, "substantially free" when used with reference to the absence of physical blowing agents, means that physical blowing agent is present, if at all, in an amount of less than 5% by weight, such as less than 1% by weight or less than 0.1% by weight, based on the total weight of blowing agent.

The polyurethane foam-forming compositions also often comprise a catalyst, such as an aliphatic tertiary amine (such as trimethylamine and/or tetramethylbutanediamine), a cycloaliphatic tertiary amine (such as 1,4-diaza (2,2,2) bicyclooctane), an aliphatic amino ether (such as dimethylaminoethyl ether and/or N, N, N-trimethyl-N- hydroxyethyl bisaminoethyl ether), a cycloaliphatic amino ether (such as N-ethylmorpholine), an aliphatic amidine, a cycloaliphatic amidine, a urea, a derivative of urea (such as aminoalkyl ureas, including (3-dimethylaminopropylamine)urea), a tin catalyst (such as di-n-octyltin mercaptide), a tin (II) salts of carboxylic acid (such as tin (II) ricinoleate, tin (II) acetate, tin (II) octoate, tin (II) ethylhexanoate and tin (II) laurate), a tin (IV) compound (such as dibutyltin oxide, dibutyltin dichloride, dibutyltin diacetate, dibutyltin dilaurate, dibutyltin maleate, and dioctyltin diacetate), or a mixture of any two or more thereof. Specific examples of suitable catalysts are (3-dimethylaminopropylamine) urea, 2-(2-dimethylaminoethoxy) ethanol, N, N-bis (3-dimethylaminopropyl) -N-isopropanolamine, N, N, N-trimethyl-N- hydroxyethyl bisaminoethyl ether, 3-dimethylaminopropylamine, or a mixture of any two or more thereof.

In some implementations, the catalyst comprises a non-emissive balanced amines that binds chemically into the polyurethane foam matrix, thereby eliminating contributions to odor and VOC emissions or may comprise an amine of sufficiently high enough molecular weight so as to not to contribute to VOC emissions, such catalysts often being collectively referred to as non-fugitive amine catalysts. Examples of such catalysts include Dabco NE-300 and Dabco NE-500 from Air Products, N,N-bis(3-dimethyl-aminopropyl)-N-isopropanolamine (available as Jeffcat ZR 50), N-(3-dimethyaminopropyl)-N.N-diisopropanolamine (available as Jeffcat DPA), 1,4-diazabicyclo[2.2.2]octane-2-methanol (available as RZETA from TOSOH Corporation).

In some implementations, the catalyst is present in an amount of 0.001 to 2.0 % by weight, such as 0.01 to 1.0 % by weight, 0.1 to 0.5 % by weight, or, in some cases, 0.2 to 0.4 % by weight, by weight of the polyurethane foam-forming composition.

In some implementations, the foam-forming composition also comprises a surfactant, such as organosilicon compounds, including polysiloxane-polyalkyene-block copolymers, such as a polyether-modified polysiloxane, as well as polyethylene glycol ethers of long chain alcohols, tertiary amine or alkanolamine salts of long chain alkyl acid sulfate esters, alkylsulfonic esters, or alkylarylsulfonic acids.

Additional materials which may optionally be included in the inventions of this specification include: pigments, colorants, fillers, antioxidants, flame retardants, gels, phase change materials, and stabilizers, among others.

The polyurethane foam-forming compositions can be particularly suitable for the production of "hypersoft" polyurethane foams and "viscoelastic" polyurethane foam. These foams are manufactured by mixing together polyisocyanate with polyol, blowing agent, and catalyst, often in the presence of other standard additives, such as surfactant, filler, colorant, flame retardant, or a combination of any two or more thereof. The foaming mixture may be allowed to rise freely in at least one direction, as in a slabstock or bunstock process, or it may be constrained to a fixed shape as in the molded foam process. Included are "variable pressure foaming" process in which a vacuum or pressure is applied during foaming by means of enclosure in a pressure chamber, and the "liquid carbon dioxide" processes in which liquified carbon dioxide is introduced into the foaming mixture through special mechanical equipment to aid in blowing the foam.

Various aspects of the subject matter described herein are set out in the following numbered clauses:
Clause 1. A filled polyol comprising: (a) a carrier polyol comprises a polyether polyol having a functionality of 2 to 6, an OH number of 20 to 120 mg KOH/g, and a poly(oxyethylene) content of at least 60% by weight, based on total weight of the polyether polyol, and (b) polymer particles dispersed in the carrier polyol, wherein the polymer particles exhibit a multimodal particle size distribution and the filled polyol has a solids content of 5% to 34% by weight, based on total weight of the filled polyol.
Clause 2. The filled polyol of clause 1, wherein the filled polyol comprises a polyisocyanate polyaddition ("PIPA") polyol, a polyurea and/or polyhydrazodicarbonamide ("PHD") polyol, a polymer polyol, or a combination thereof.
Clause 3. The filled polyol of clause 2, wherein the filled polyol comprises a PHD polyol comprising a reaction product of a composition comprising an isocyanate and a diamine and/or hydrazine (or hydrazine hydrate) in the carrier polyol, such as where the isocyanate comprises an isocyanate mixture of 75% to 85% by weight of 2,4-tolylene diisocyanate (2,4-TDI) and 15% to 25% by weight of 2,6-tolylene diisocyanate (2,6-TDI) and the carrier polyol comprises an alkoxylation product of a trifunctional starter, such as glycerol and/or trimethylolpropane.
Clause 4. The filled polyol of clause 2, wherein the filled polyol comprises a PIPA polyol comprising polyether polyols modified with an alkanolamines by polyisocyanate polyaddition.
Clause 5. The filled polyol of clause 2, wherein the filled polyol comprises a PMPO wherein the polymer particles comprise a free radical polymerization reaction product of an ethylenically unsaturated monomer.
Clause 6. The filled polyol of one of clause 1 to clause 5, wherein the carrier polyol has a functionality of 2 to 4, 2.5 to 3.5, or 2.8 to 3.2.
Clause 7. The filled polyol of one of clause 1 to clause 6, wherein the carrier polyol has an OH number of 20 to 100 mg KOH/g, 20 to 50 mg KOH/g, 25 to 50 mg KOH/g, or 30 to 50 mg KOH/g.
Clause 8. The filled polyol one of clause 1 to clause 7, wherein the carrier polyol has a poly(oxyethylene) content of 60% to 90% by weight, 60 to 80% by weight, or 65 to 75% by weight, based on the total weight of the polyether polyol.
Clause 9. The filled polyol of one of clause 1 to clause 8, wherein the polyether polyol comprises an alkylene oxide addition product of a starter compounds with Zerewitinoff-active hydrogen atom, wherein the starter compound has a hydroxyl functionality of 2 to 6, 2 to 4, or 3, such as where the starter compound comprises propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, a condensation product of formaldehyde and phenol or melamine or urea which contains methylol groups, or a combination of any two or more thereof.
Clause 10. The filled polyol of clause 9, wherein the alkylene oxide comprises (a) ethylene oxide ("EO"), and (b) propylene oxide ("PO"), 1,2-butylene-oxide, 2,3-butylene oxide, styrene oxide, or a combination thereof.
Clause 11. The filled polyol of clause 9 or clause 10, wherein the polyether polyol comprises an EO-PO block copolymer.
Clause 12. The filled polyol of one of clause 9 to clause 11, wherein the alkylene oxide addition reaction is catalyzed using potassium hydroxide (KOH) or a double metal cyanide (DMC) catalyst.
Clause 13. The filled polyol of one of clause 9 to clause 12, wherein the polyether polyol comprises an ethylene oxide cap, wherein the ethylene oxide cap is present in an amount sufficient to provide a polyether polyol having a poly(oxyethylene) content of at least 60% by weight, 60% to 90% by weight, 60 to 80% by weight, or 65 to 75% by weight, based on the total weight of the polyether polyol.
Clause 14. The filled polyol of one of clause 1 to clause 13, wherein the polyether polyol having a functionality of 2 to 6, an OH number of 20 to 120 mg KOH/g, and a poly(oxyethylene) content of at least 60% by weight, based on total weight of the polyether polyol, is present in an amount of at least 50% by weight, at least 70% by weight, at least 80% by weight, at least 90% by weight, or 100% by weight, based on the total weight of carrier polyol.
Clause 15. The filled polyol of one of clause 1 to clause 14, wherein the carrier polyol further comprises a polyether polyol having a functionality of 2 to 8, 2 to 6, or 3 to 6, and an OH number of 20 to 400 mg KOH/g, 20 to 200 mg KOH/g, 20 to 150 mg KOH/g, 20 to 100 mg KOH/g, 20 to 50 mg KOH/g, 25 to 50 mg KOH/g, or 30 to 50 mg KOH/g, and a poly(oxyethylene) content of less than 60% by weight, less than 50% by weight, less than 40% by weight, less than 30% by weight, or less than 20% by weight, 60% to 90% by weight, 60 to 80% by weight, or 65 to 75% by weight, based on the total weight of the polyether polyol.
Clause 16. The filled polyol of one of clause 5 to clause 15, wherein the ethylenically unsaturated monomer comprises styrene and acrylonitrile, such as a combination of styrene and acrylonitrile in which the weight ratio of styrene to acrylonitrile (S:AN) is within the range of 80:20 to 20:80, 75:25 to 25:75, 50:50 to 30:70, or 45:55 to 35:65.
Clause 17. The filled polyol of one of clause 1 to clause 16, wherein the filled polyol has a solids content of 10 to 30% by weight, or 15 to 25% by weight, based on the total weight of all components used to prepare the filled polyol.
Clause 18. The filled polyol of one of clause 5 to clause 17, further comprising a preformed stabilizer.
Clause 19. The filled polyol of clause 18, wherein the preformed stabilizer comprises a reaction product of a reaction mixture comprising (i) an ethylenically unsaturated macromer, (ii) an ethylenically unsaturated monomer, (iii) a free radical initiator, (iv) a polymer control agent, and optionally (v) a diluent.
Clause 20. The filled polyol of clause 19, wherein the macromer comprises a reaction product of a reaction mixture comprising: (i) an H-functional starter having a functionality of 2 to 8 and a hydroxyl number of 20 to 50 mg KOH/g; (ii) 0.1 to 3% by weight, based on 100% by weight of the sum of components (i), (ii) and (iii), of a hydroxyl-reactive compound that contains reactive unsaturation; and (iii) 0 to 3% by weight, 0.05 to 2.5% by weight, or 0.1 to 1.5% by weight, based on 100% by weight of the sum of components (i), (ii) and (iii), of a diisocyanate.
Clause 21. The filled polyol of clause 20, wherein the H-functional starter (i) present in the reaction mixture has a hydroxyl functionality of 3 to 6 and/or a hydroxyl number of 25 to 40, mg KOH/g, such as where the H-functional starter comprises an alkylene oxide adduct of a hydroxyl functional compound, such as glycerin, trimethylolpropane, pentaerythritol, dipentaerythritol, sorbitol, mannitol, or a mixture of any two or more thereof, with an alkylene oxide comprising propylene oxide and/or ethylene oxide, such as where ethylene oxide is utilized in an amount of 1 to 40% by weight, 5 to 30% by weight or 10 to 25% by weight, based on the total weight of the starter used, such as where ethylene oxide is added as a cap in an amount of 1 to 40% by weight, 3 to 30% by weight or 5 to 25% by weight, based on the total weight of starter.
Clause 22. The filled polyol of clause 20 or clause 21, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a mixture of any two or more thereof.
Clause 23. The filled polyol of one of clause 20 to clause 22, wherein the diisocyanate comprises diphenylmethane diisocyanate, such as a mixture of any two or more of 2,4'-diphenylmethane diisocyanate, 4,4'-diphenylmethane diisocyanate and 2,2'-diphenyl-methane diisocyanate, toluenediisocyanate, isophoronediisocyanate, hexamethylenediisocyanate, 4,4'-methylenebis(cyclohexyl isocyanate), or a mixture of any two or more thereof.
Clause 24. The process for preparing a PMPO of one of clause 19 to clause 23, wherein the macromer is present in an amount of 10 to 40% by weight or 15 to 35% by weight, based on the total weight of the reaction mixture used to produce the preformed stabilizer.
Clause 25. The process for preparing a PMPO of one of clause 19 to clause 24, wherein the ethylenically unsaturated monomer (ii) present in the preformed stabilizer reaction mixture comprises a mixture of acrylonitrile and an ethylenically unsaturated comonomer which is copolymerizable with acrylonitrile, such as styrene and/or a derivative thereof, an acrylate, a methacrylate, such as methyl methacrylate, vinylidene chloride, or a mixture of any two or more thereof, such as where the ethylenically unsaturated monomer (2)(i) present in the preformed stabilizer reaction mixture comprises a mixture of acrylonitrile and styrene in which acrylonitrile is present in an amount of 20 to 80% by weight or 30 to 70% by weight, based on the total weight of the monomer mixture, and styrene is present in an amount of 80 to 20% by weight or 70 to 30% by weight percent, based on the total weight of the monomer mixture.
Clause 26. The filled polyol of one of clause 19 to clause 25, wherein the ethylenically unsaturated monomer (ii) present in the preformed stabilizer reaction mixture is present in an amount of 10 to 30% by weight or 15 to 25% by weight, based on the total weight of the reaction mixture used to produce the preformed stabilizer.
Clause 27. The filled polyol of one of clause 19 to clause 26, wherein the free radical initiator (iii) present in the preformed stabilizer reaction mixture comprises hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), 2,2'-azo bis-(2-methylbutyronitrile), or a mixture of any two or more thereof.
Clause 28. The filled polyol of one of clause 19 to clause 27, wherein the free radical initiator (iii) present in the preformed stabilizer reaction mixture is present in an amount of 0.01 to 2% by weight, such as 0.05 to 1% by weight or 0.05 to 0.3% by weight, based on the total weight of the preformed stabilizer reaction mixture.
Clause 29. The filled polyol of one of clause 19 to clause 28, wherein the polymer control agent (iv) present in the preformed stabilizer reaction mixture comprises methanol, ethanol, n-propanol, isopropanol, n-butanol, sec.-butanol, t-butanol, n-pentanol, 2-pentanol, 3-pentanol, toluene, ethylbenzene, or a mixture of any two or more thereof.
Clause 30. The filled polyol of one of clause 19 to clause 29, wherein the polymer control agent (iv) is present in an amount of 30 to 80% by weight or 40 to 70% by weight, based on the total weight of the preformed stabilizer reaction mixture.
Clause 31. The filled polyol of one of clause 19 to clause 30, wherein the diluent (v) optionally present in the preformed stabilizer reaction mixture comprises an alkylene oxide adducts having a hydroxyl functionality of greater 2.
Clause 32. The filled polyol of one of clause 19 to clause 31, wherein the diluent is present in an amount of 0 to 40% by weight, 0 to 20% by weight, or 0 to 10% by weight, based on the total weight of the preformed stabilizer reaction mixture.
Clause 33. The filled polyol of one of clause 1 to clause 32, wherein the filled polyol has a particle size distribution curve (as measured by the particle distribution volume fraction) having at least two peaks in which the first peak is at a particle size of no more than 1 micron, such as at a particle size of 0.1 to 1 micron, 0.2 to 0.8 micron, or, 0.3 to 0.7 micron, and the second peak is at a particle size of more than 1 micron, such as more than 1 to 5 micron.
Clause 34. The filled polyol of one of clause 1 to clause 33, wherein the filled polyol contains a volume fraction of particles having a particle size falling within the first peak of at least 50% by volume, 50 to 90% by volume, 60 to 90 % by volume or 70 to 90% by volume, based on the total volume of particles in the filled polyol, and contains a volume fraction of particles having a particle size falling within the second peak of no more than 50% by volume, 10 to 50% by volume, 10 to 40% by volume, or 10 to 30% by volume, based on the total volume of particles in the filled polyol.
Clause 35. A polyurethane foam, such as a flexible foam (such as a hyper-soft foam or viscoelastic foam), prepared with the filled polyol of one of clause 1 to clause 34, such as where the polyurethane foam has a density, measured according to ASTM D1622-14, of no more than 4 lb/ft³ (no more than 64 kg/m³), 1 to 4 lb/ft³ (16 to 64 kg/m³), 1 to 3 lb/ft³ (16 to 48 kg/m³), or 1.5 to 2.5 lb/ft³ (24 to 40 kg/m³).
Clause 36. A process for preparing the polyurethane foam of clause 35, comprising reacting a polyisocyanate, such as a mixture of 2,4- and 2,6- toluene diisocyanate, such as a mixture of 79.5 to 81.5 weight percent 2,4-toluene diisocyanate and 18.5 to 20.5 weight percent of 2,6-toluene diisocyanate, with a polyol composition that includes the filled polyol of one of clause 1 to clause 34, wherein the polyisocyanate is present in an amount sufficient to provide an isocyanate index of 70 to 130, 80 to 120, 90 to 110, or 95 to 100.
Clause 37. The process of clause 36, wherein the filled polyol is present in an amount of at least 5% by weight, at least 10% by weight, 10 to 90% by weight, or 10 to 50% by weight, based on total weight of polyol, such as where the filled polyol is present in an amount such that solid polymer particles are present in an amount of at least 1% by weight, such as 1 to 20% by weight, or 5 to 20% by weight, based on total weight of polyol.
Clause 38. The process of clause 36 or clause 37, wherein the polyol composition has a weight average hydroxyl functionality of 2 to 4, 2.5 to 3.5, or 2.5 to 3.
Clause 39. The process of one of clause 36 to clause 38, wherein the polyol composition has a weight average OH number of 20 to 120 mg KOH/g polyol, 20 to 100 mg KOH/g polyol, 20 to 80 mg KOH/g polyol, or 40 to 80 mg KOH/g polyol.
Clause 40. The process of one of clause 36 to clause 39, wherein the polyol composition has a poly(oxyethylene) content of at least 35% by weight, 40 to 80% by weight, 40 to 60% by weight, or 50 to 60% by weight, based on the total weight of polyol.
Clause 41. The process of one of clause 36 to clause 40, wherein the polyol composition comprises a polyether polyol, different from the filled polyol of one of clause 1 to clause 34, that has a functionality of greater than 2, greater than 2 and up to 6, 3 to 6, 3 to 5, 3 to 4, or 3; an oxyethylene content of 0 to 50 wt. %, 1 to 25 wt % or 10 to 30 wt %; more than 50 mol % or 80 to 90 mole %, of primary OH groups; and an OH number of 8 to 112 mg KOH/g, 20 to 50 mg KOH/g, or 25 to 35 mg KOH/g.
Clause 42. The process of clause 41, wherein the polyether polyol having a functionality of greater than 2, an oxyethylene content of 0 to 50 wt. %, more than 50 mol % of primary OH groups, and an OH number of 8 to 112 mg KOH/g is present in an amount of up to 50% by weight, 1 to 50% by weight, 10 to 50% by weight, or 10 to 30% by weight, based on the total weight of polyol.
Clause 43. The process of clause 41 or clause 42, wherein the polyether polyol having a functionality of greater than 2, an oxyethylene content of 0 to 50 wt. %, more than 50 mol % of primary OH groups, and an OH number of 8 to 112 mg KOH/g is present as a carrier polyol for a filled polyol, such as a PMPO.
Clause 44. The process of one of clause 41 to clause 43, wherein the polyol composition comprises a polyether polyol introduced to the composition separately from the filled polyol, that has a functionality of 2 to 6 or 3, an oxyethylene content of at least 60% by weight or at least 70% by weight; at least 50 mol % or 50 to 60 mole % of primary OH groups; and a hydroxyl number of 10 to 112 mg KOH/g or 30 to 50 mg KOH/g, such as where the polyether polyol introduced to the composition separately from the filled polyol is present in an amount of at least 5% by weight, at least 10% by weight, 10 to 90% by weight, or 10 to 50% by weight, based on total weight of polyol.
Clause 45. The process of one of clause 36 to clause 44, wherein the polyol composition comprises a compound having at least two isocyanate-reactive hydrogen atoms and a molecular weight from 62 to 399, such as ethylene glycol, propylene glycol-(1,2) and -(1,3), butylene glycol-(1,4) and - (2,3), pentanediol-(1,5), hexanediol-(1,6), octanediol-(1,8), neopentylglycol, 1,4-bis-hydroxymethyl-cyclohexane, 2-methyl-1,3-propanediol, dibromobutenediol, glycerol, trimethylolpropane, hexanetriol-(1,2,6), trimethylolethane, pentaerythritol, quinitol, mannitol, sorbitol, castor oil, diethylene glycol, triethylene glycol, tetraethyleneglycol, a higher polyethylene glycol having a molecular weight of up to 399, dipropylene glycol, a higher polypropylene glycol having a molecular weight of up to 399, dibutylene glycol, a higher polybutylene glycol having a molecular weight of up to 399, 4,4'-dihydroxy-diphenylpropane, dihydroxymethyl-hydroquinone, ethanolamine, diethanolamine, N-methyldiethanolamine, triethanolamine, 3-aminopropanol, or a mixture of any two or more thereof.
Clause 46. The process of one of clause 36 to clause 45, wherein the polyol composition comprises no more than 10% by weight, no more than 5% by weight, no more than 2% by weight, or no more than 1% by weight, based on the total weight of polyol, of a polyol having an OH number greater than 120 mg KOH/g.
Clause 47. The process of one of clause 36 to clause 46, wherein the reaction takes place in the presence of a blowing agent, such as a chemical blowing agent (such as water and/or), a physical blowing agent (such as acetone, methylene chloride, carbon dioxide, a CFC, a chlorinated hydrocarbons, a HFO (such as a hydrofluorochloroolefin), a hydrocarbon (such as propane, butane, pentane, and hexane, and acetals such as methylal), or a mixture thereof.
Clause 48. A process for preparing a PMPO comprising: (a) continuously introducing components comprising (i) a carrier polyol, (ii) an ethylenically unsaturated monomer, (iii) a radical initiator, and (iv) a preformed stabilizer into a continuous reactor, and (b) continuously removing the PMPO from the continuous reactor, wherein (1) the carrier polyol comprises a polyether polyol having a functionality of 2 to 6, an OH number of 20 to 120 mg KOH/g, and a poly(oxyethylene) content of at least 60% by weight, based on total weight of the polyether polyol, and (2) the preformed stabilizer comprises a reaction product of a reaction mixture comprising (i) an ethylenically unsaturated macromer, (ii) an ethylenically unsaturated monomer, (iii) a free radical initiator, (iv) a polymer control agent, and optionally (v) a diluent.
Clause 49. The process for preparing a PMPO of clause 48, wherein the continuous reactor comprises a CSTR, a two stage CSTR, a plug flow reactor, or a loop reactor, such as a stream loop reactor, a jet loop reactor, a Venturi loop reactor, a tube reactor configured in loop form, or a loop of several tube reactors connected in series or several stirred tanks connected in series.
Clause 50. The process for preparing a PMPO of clause 48 or clause 49, wherein the carrier polyol has a functionality of 2 to 4, 2.5 to 3.5, or 2.8 to 3.2.
Clause 51. The process for preparing a PMPO of one of clause 48 to clause 50, wherein the carrier polyol has an OH number of 20 to 100 mg KOH/g, 20 to 50 mg KOH/g, 25 to 50 mg KOH/g, or 30 to 50 mg KOH/g.
Clause 52. The process for preparing a PMPO of one of clause 48 to clause 51, wherein the carrier polyol has a poly(oxyethylene) content of 60% to 90% by weight, 60 to 80% by weight, or 65 to 75% by weight, based on the total weight of the polyether polyol.
Clause 53. The process for preparing a PMPO of one of clause 48 to clause 52, wherein the polyether polyol comprises an alkylene oxide addition product of a starter compounds with Zerewitinoff-active hydrogen atom, wherein the starter compound has a hydroxyl functionality of 2 to 6, 2 to 4, or 3, such as where the starter compound comprises propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, a condensation product of formaldehyde and phenol or melamine or urea which contains methylol groups, or a combination of any two or more thereof.
Clause 54. The process for preparing a PMPO of clause 53, wherein the alkylene oxide comprises (a) ethylene oxide ("EO"), and (b) propylene oxide ("PO"), 1,2-butylene-oxide, 2,3-butylene oxide, styrene oxide, or a combination thereof.
Clause 55. The process for preparing a PMPO of clause 53 or clause 54, wherein the polyether polyol comprises an EO-PO block copolymer.
Clause 56. The process for preparing a PMPO of one of clause 53 to clause 55, wherein the alkylene oxide addition reaction is catalyzed using potassium hydroxide (KOH) or a double metal cyanide (DMC) catalyst.
Clause 57. The process for preparing a PMPO of one of clause 53 to clause 56, wherein the polyether polyol comprises an ethylene oxide cap, wherein the ethylene oxide cap is present in an amount sufficient to provide a polyether polyol having a poly(oxyethylene) content of at least 60% by weight, 60% to 90% by weight, 60 to 80% by weight, or 65 to 75% by weight, based on the total weight of the polyether polyol
Clause 58. The process for preparing a PMPO of one of clause 48 to clause 57, wherein the polyether polyol having a functionality of 2 to 6, an OH number of 20 to 120 mg KOH/g, and a poly(oxyethylene) content of at least 60% by weight, based on total weight of the polyether polyol, is present in an amount of at least 50% by weight, at least 70% by weight, at least 80% by weight, at least 90% by weight, or 100% by weight, based on the total weight of carrier polyol.
Clause 59. The process for preparing a PMPO of one of clause 48 to clause 58, wherein the carrier polyol further comprises a polyether polyol having a functionality of 2 to 8, 2 to 6, or 3 to 6, and an OH number of 20 to 400 mg KOH/g, 20 to 200 mg KOH/g, 20 to 150 mg KOH/g, 20 to 100 mg KOH/g, 20 to 50 mg KOH/g, 25 to 50 mg KOH/g, or 30 to 50 mg KOH/g, and a poly(oxyethylene) content of less than 60% by weight, less than 50% by weight, less than 40% by weight, less than 30% by weight, or less than 20% by weight, 60% to 90% by weight, 60 to 80% by weight, or 65 to 75% by weight, based on the total weight of the polyether polyol.
Clause 60. The process for preparing a PMPO of one of clause 48 to clause 59, wherein the ethylenically unsaturated monomer (a)(ii) that is continuously introduced into the continuous reactor comprises styrene and acrylonitrile, such as a combination of styrene and acrylonitrile in which the weight ratio of styrene to acrylonitrile (S:AN) is within the range of 80:20 to 20:80, 75:25 to 25:75, 50:50 to 30:70, or 45:55 to 35:65.
Clause 61. The process for preparing a PMPO of one of clause 48 to clause 60, wherein the ethylenically unsaturated monomer (a)(ii) fed to the continuous reactor is sufficient to provide a PMPO having a solids content of 5 to 45% by weight, 5 to 34% by weight, 10 to 30% by weight, or 15 to 25% by weight, based on the total weight of all components used to prepare the PMPO.
Clause 62. The process for preparing a PMPO of one of clause 48 to clause 61, wherein the radical initiator comprises a peroxide, an azo compound, or a mixture thereof, such as where the radical initiator comprises 2,2'-azo-bis-isobutyronitrile (AIBN), dibenzoyl peroxide, lauroyl peroxide, dit-butyl peroxide, diisopropyl peroxide carbonate, t-butyl peroxy-2-ethylhexanoate, t-butylperneodecanoate, t-butylperbenzoate, t-butyl percrotonate, t-butyl perisobutyrate, di-t-butyl perphthalate, 2,2'-azo-bis(2-methylbutane-nitrile), or a mixture of any two or more thereof.
Clause 63. The process for preparing a PMPO of one of clause 48 to clause 62, wherein the radical initiator is introduced to the continuous reactor in an amount of 0.01 to 5.0 % by weight, based on the total weight of the components used to produce the PMPO.
Clause 64. The process for preparing a PMPO of one of clause 48 to clause 63, wherein the macromer comprises a reaction product of a reaction mixture comprising: (i) an H-functional starter having a functionality of 2 to 8 and a hydroxyl number of 20 to 50 mg KOH/g; (ii) 0.1 to 3% by weight, based on 100% by weight of the sum of components (i), (ii) and (iii), of a hydroxyl-reactive compound that contains reactive unsaturation; and (iii) 0 to 3% by weight, 0.05 to 2.5% by weight, or 0.1 to 1.5% by weight, based on 100% by weight of the sum of components (i), (ii) and (iii), of a diisocyanate.
Clause 65. The process for preparing a PMPO of clause 64, wherein the H-functional starter (i) present in the reaction mixture has a hydroxyl functionality of 3 to 6 and/or a hydroxyl number of 25 to 40, mg KOH/g, such as where the H-functional starter comprises an alkylene oxide adduct of a hydroxyl functional compound, such as glycerin, trimethylolpropane, pentaerythritol, dipentaerythritol, sorbitol, mannitol, or a mixture of any two or more thereof, with an alkylene oxide comprising propylene oxide and/or ethylene oxide, such as where ethylene oxide is utilized in an amount of 1 to 40% by weight, 5 to 30% by weight or 10 to 25% by weight, based on the total weight of the starter used, such as where ethylene oxide is added as a cap in an amount of 1 to 40% by weight, 3 to 30% by weight or 5 to 25% by weight, based on the total weight of starter.
Clause 66. The process for preparing a PMPO of clause 64 or clause 65, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a mixture of any two or more thereof.
Clause 67. The process for preparing a PMPO of one of clause 64 to clause 66, wherein the diisocyanate comprises diphenylmethane diisocyanate, such as a mixture of any two or more of 2,4'-diphenylmethane diisocyanate, 4,4'-diphenylmethane diisocyanate and 2,2'-diphenyl-methane diisocyanate, toluenediisocyanate, isophoronediisocyanate, hexamethylenediisocyanate, 4,4'-methylenebis(cyclohexyl isocyanate), or a mixture of any two or more thereof.
Clause 68. The process for preparing a PMPO of one of clause 64 to clause 67, wherein the macromer is present in an amount of 10 to 40% by weight or 15 to 35% by weight, based on the total weight of the reaction mixture used to produce the preformed stabilizer.
Clause 69. The process for preparing a PMPO of one of clause 48 to clause 68, wherein the ethylenically unsaturated monomer (2)(i) present in the preformed stabilizer reaction mixture comprises a mixture of acrylonitrile and an ethylenically unsaturated comonomer which is copolymerizable with acrylonitrile, such as styrene and/or a derivative thereof, an acrylate, a methacrylate, such as methyl methacrylate, vinylidene chloride, or a mixture of any two or more thereof, such as where the ethylenically unsaturated monomer (2)(i) present in the preformed stabilizer reaction mixture comprises a mixture of acrylonitrile and styrene in which acrylonitrile is present in an amount of 20 to 80% by weight or 30 to 70% by weight, based on the total weight of the monomer mixture, and styrene is present in an amount of 80 to 20% by weight or 70 to 30% by weight percent, based on the total weight of the monomer mixture.
Clause 70. The process for preparing a PMPO of one of clause 48 to clause 69, wherein the ethylenically unsaturated monomer (2)(i) present in the preformed stabilizer reaction mixture is present in an amount of 10 to 30% by weight or 15 to 25% by weight, based on the total weight of the reaction mixture used to produce the preformed stabilizer.
Clause 71. The process for preparing a PMPO of one of clause 48 to clause 70, wherein the free radical initiator (2)(iii) present in the preformed stabilizer reaction mixture comprises hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), 2,2'-azo bis-(2-methylbutyronitrile), or a mixture of any two or more thereof.
Clause 72. The process for preparing a PMPO of one of clause 48 to clause 71, wherein the free radical initiator (2)(iii) present in the preformed stabilizer reaction mixture is present in an amount of 0.01 to 2% by weight, such as 0.05 to 1% by weight or 0.05 to 0.3% by weight, based on the total weight of the preformed stabilizer reaction mixture.
Clause 73. The process for preparing a PMPO of one of clause 48 to clause 72, wherein the polymer control agent (2)(iv) present in the preformed stabilizer reaction mixture comprises methanol, ethanol, n-propanol, isopropanol, n-butanol, sec.-butanol, t-butanol, n-pentanol, 2-pentanol, 3-pentanol, toluene, ethylbenzene, or a mixture of any two or more thereof.
Clause 74. The process for preparing a PMPO of one of clause 48 to clause 73, wherein the polymer control agent (2)(iv) is present in an amount of 30 to 80% by weight or 40 to 70% by weight, based on the total weight of the preformed stabilizer reaction mixture.
Clause 75. The process for preparing a PMPO of one of clause 48 to clause 74, wherein the diluent (2)(v) optionally present in the preformed stabilizer reaction mixture comprises an alkylene oxide adducts having a hydroxyl functionality of greater 2.
Clause 76. The process for preparing a PMPO of one of clause 48 to clause 75, wherein the diluent is present in an amount of 0 to 40% by weight, 0 to 20% by weight, or 0 to 10% by weight, based on the total weight of the preformed stabilizer reaction mixture.
Clause 77. The process for preparing a PMPO of one of clause 48 to clause 76, wherein the PMPO reaction temperature at least 80°C, at least 90°C, or at least 110°C and no more than 200°C, no more than 150°C, or no more than 130°C.
Clause 78. The process for preparing a PMPO of one of clause 48 to clause 77, comprising: (1) providing a heterogeneous mixture of preformed stabilizer and, optionally, a chain transfer agent, in combination with carrier polyol, ethylenically unsaturated monomer, and free radical initiator, (2) introducing the heterogeneous mixture to a reaction zone maintained at a temperature sufficient to initiate a free radical reaction, and under sufficient pressure to maintain only liquid phases in the reaction zone, (3) maintaining the heterogeneous mixture in the reaction zone for a period of time sufficient to react at least a major portion of the ethylenically unsaturated monomer to form a heterogeneous mixture containing enhanced PMPO, unreacted monomers and chain transfer agent, and (4) stripping the unreacted monomers and diluent from the enhanced PMPO to recover the unreacted monomers and diluent.
Clause 79. The process for preparing a PMPO of one of clause 48 to clause 78, wherein the process produces a PMPO having a multimodal particle size distribution, such as where the PMPO has a particle size distribution curve (as measured by the particle distribution volume fraction) having at least two peaks in which the first peak is at a particle size of no more than 1 micron, such as at a particle size of 0.1 to 1 micron, 0.2 to 0.8 micron, or, 0.3 to 0.7 micron, and the second peak is at a particle size of more than 1 micron, such as more than 1 to 5 micron.
Clause 80. The process for preparing a PMPO of clause 79, wherein the PMPO contains a volume fraction of particles having a particle size falling within the first peak of at least 50% by volume, 50 to 90% by volume, 60 to 90 % by volume or 70 to 90% by volume, based on the total volume of particles in the PMPO, and contains a volume fraction of particles having a particle size falling within the second peak of no more than 50% by volume, 10 to 50% by volume, 10 to 40% by volume, or 10 to 30% by volume, based on the total volume of particles in the PMPO.
Clause 81. A polyurethane foam, such as a flexible foam (such as a hyper-soft foam or viscoelastic foam), prepared with a PMPO produced by the process of one of clause 48 to clause 80, such as where the polyurethane foam has a density, measured according to ASTM D1622-14, of no more than 4 lb/ft³ (no more than 64 kg/m³), 1 to 4 lb/ft³ (16 to 64 kg/m³), 1 to 3 lb/ft³ (16 to 48 kg/m³), or 1.5 to 2.5 lb/ft³ (24 to 40 kg/m³).
Clause 82. A process for preparing the polyurethane foam of clause 81, comprising reacting a polyisocyanate, such as a mixture of 2,4- and 2,6- toluene diisocyanate, such as a mixture of 79.5 to 81.5 weight percent 2,4-toluene diisocyanate and 18.5 to 20.5 weight percent of 2,6-toluene diisocyanate, with a polyol composition that includes a PMPO produced by the process for preparing a PMPO of one of clause 48 to clause 80, wherein the polyisocyanate is present in an amount sufficient to provide an isocyanate index of 70 to 130, 80 to 120, 90 to 110, or 95 to 100.
Clause 83. The process of clause 82, wherein the PMPO produced by the process for preparing a PMPO of one of clause 48 to clause 80 is present in an amount of at least 5% by weight, at least 10% by weight, 10 to 90% by weight, or 10 to 50% by weight, based on total weight of polyol, such as where the PMPO is present in an amount such that solid polymer particles are present in an amount of at least 1% by weight, such as 1 to 20% by weight, or 5 to 20% by weight, based on total weight of polyol.
Clause 84. The process of clause 82 or clause 83, wherein the polyol composition has a weight average hydroxyl functionality of 2 to 4, 2.5 to 3.5, or 2.5 to 3.
Clause 85. The process of one of clause 82 to clause 84, wherein the polyol composition has a weight average OH number of 20 to 120 mg KOH/g polyol, 20 to 100 mg KOH/g polyol, 20 to 80 mg KOH/g polyol, or 40 to 80 mg KOH/g polyol.
Clause 86. The process of one of clause 82 to clause 85, wherein the polyol composition has a poly(oxyethylene) content of at least 35% by weight, 40 to 80% by weight, 40 to 60% by weight, or 50 to 60% by weight, based on the total weight of polyol.
Clause 87. The process of one of clause 82 to clause 86, wherein the polyol composition comprises a polyether polyol, different from the PMPO, that has a functionality of greater than 2, greater than 2 and up to 6, 3 to 6, 3 to 5, 3 to 4, or 3; an oxyethylene content of 0 to 50 wt. %, 1 to 25 wt % or 10 to 30 wt %; more than 50 mol % or 80 to 90 mole %, of primary OH groups; and an OH number of 8 to 112 mg KOH/g, 20 to 50 mg KOH/g, or 25 to 35 mg KOH/g.
Clause 88. The process of clause 87, wherein the polyether polyol having a functionality of greater than 2, an oxyethylene content of 0 to 50 wt. %, more than 50 mol % of primary OH groups, and an OH number of 8 to 112 mg KOH/g is present in an amount of up to 50% by weight, 1 to 50% by weight, 10 to 50% by weight, or 10 to 30% by weight, based on the total weight of polyol.
Clause 89. The process of clause 87 or clause 88, wherein the polyether polyol having a functionality of greater than 2, an oxyethylene content of 0 to 50 wt. %, more than 50 mol % of primary OH groups, and an OH number of 8 to 112 mg KOH/g is present as a carrier polyol for a filled polyol, such as a PMPO.
Clause 90. The process of one of clause 87 to clause 89, wherein the polyol composition comprises a polyether polyol introduced to the composition separately from the PMPO, that has a functionality of 2 to 6 or 3, an oxyethylene content of at least 60% by weight or at least 70% by weight; at least 50 mol % or 50 to 60 mole % of primary OH groups; and a hydroxyl number of 10 to 112 mg KOH/g or 30 to 50 mg KOH/g, such as where the polyether polyol introduced to the composition separately from the PMPO is present in an amount of at least 5% by weight, at least 10% by weight, 10 to 90% by weight, or 10 to 50% by weight, based on total weight of polyol.
Clause 91. The process of one of clause 82 to clause 90, wherein the polyol composition comprises a compound having at least two isocyanate-reactive hydrogen atoms and a molecular weight from 62 to 399, such as ethylene glycol, propylene glycol-(1,2) and -(1,3), butylene glycol-(1,4) and - (2,3), pentanediol-(1,5), hexanediol-(1,6), octanediol-(1,8), neopentylglycol, 1,4-bis-hydroxymethyl-cyclohexane, 2-methyl-1,3-propanediol, dibromobutenediol, glycerol, trimethylolpropane, hexanetriol-(1,2,6), trimethylolethane, pentaerythritol, quinitol, mannitol, sorbitol, castor oil, diethylene glycol, triethylene glycol, tetraethyleneglycol, a higher polyethylene glycol having a molecular weight of up to 399, dipropylene glycol, a higher polypropylene glycol having a molecular weight of up to 399, dibutylene glycol, a higher polybutylene glycol having a molecular weight of up to 399, 4,4'-dihydroxy-diphenylpropane, dihydroxymethyl-hydroquinone, ethanolamine, diethanolamine, N-methyldiethanolamine, triethanolamine, 3-aminopropanol, or a mixture of any two or more thereof.
Clause 92. The process of one of clause 82 to clause 91, wherein the polyol composition comprises no more than 10% by weight, no more than 5% by weight, no more than 2% by weight, or no more than 1% by weight, based on the total weight of polyol, of a polyol having an OH number greater than 120 mg KOH/g.
Clause 93. The process of one of clause 82 to clause 92, wherein the reaction takes place in the presence of a blowing agent, such as a chemical blowing agent (such as water and/or), a physical blowing agent (such as acetone, methylene chloride, carbon dioxide, a CFC, a chlorinated hydrocarbons, a HFO (such as a hydrofluorochloroolefin), a hydrocarbon (such as propane, butane, pentane, and hexane, and acetals such as methylal), or a mixture thereof.

### EXAMPLES

The present invention is further illustrated, but is not to be limited, by the following examples. The following materials were used in the Examples:
**Polyol 1:** A propylene oxide adduct of sorbitol containing a 16% ethylene oxide cap with a hydroxyl number of 28 mg KOH/g;
**Polyol 2:** A propylene oxide adduct of glycerine containing a 72.7% ethylene oxide cap with a hydroxyl number of 37 mg KOH/g and 50-60 mol % primary OH;
**Polyol 3:** A propylene oxide adduct of glycerine containing a 20% ethylene oxide cap with a hydroxyl number of 36 mg KOH/g;
**Isocyanate A:** A monomeric MDI comprising about 42% by weight of the 4,4'-isomer of MDI, about 57% by weight of the 2,4'-isomer of MDI and the balance being the 2,2'-isomer of MDI
**TMI:** Isopropenyl dimethyl benzyl isocyanate (an unsaturated aliphatic isocyanate) sold as TMI^{®} by Allnex;
**Initiator 1:** TBPEH (tertiary-butyl peroxy-2-ethylhexanoate), a free-radical polymerization initiator commercially available from United Initiators;
**Initiator 2:** AIBN (2,2'-Azobisisobutyronitrile), a free-radical polymerization initiator commercially available as VAZO 64 from Chemours;
**Initiator 3:** tertiary-Amyl peroxypivalate, available as Trigonox 125-C75 from Nouryon;
**Initiator 4:** 1,1-Di(tert-amylperoxy)cyclohexane, available as Trigonox 122-C80 from Nouryon;
**Filtration:** Filterability was determined by diluting one part by weight sample (e.g. 200 grams) of PMPO with two parts by weight anhydrous isopropanol (e.g. 400 grams) to remove any viscosity-imposed limitations and using a fixed quantity of material relative to a fixed cross-sectional area of screen (e.g. 1 1/8 in. diameter), such that all of the PMPO and isopropanol solutions passes by gravity through a 150-mesh screen. The 150-mesh screen has a square mesh with average mesh opening of 105 microns and it is a "Standard Tyler" 150 square-mesh screen.
**Macromer 1:** Produced by heating Polyol 1 (99.14%), TMI (0.45%), Isocyanate A (0.40%), and 0.01% of bismuth(III)neodecanoate catalyst at 75 °C for 4 hours.

### PREFORMED STABILIZER PREPARATION:

The preformed stabilizer was prepared in a two-stage reaction system comprising a CSTR fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 65 psig. The product, i.e. the preformed stabilizer, then passed through a cooler and into a collection vessel. The preformed stabilizer formulation is disclosed in Table 1.

**Table 1**

| **Component** | **PFS** |
|---|---|
| PCA Type | Isopropanol |
| PCA, wt. % | 60.0% |
| Macromer | Macromer 1 |
| Macromer, wt. % | 24.0% |
| Monomer, wt. % | 15.9% |
| Styrene/acrylonitrile ratio | 50:50 |
| Initiator 1, wt. % | 0.1% |

### PMPO PREPARATION:

This series of examples (Table 2) relates to the preparation of PMPOs. The PMPOs were prepared in a two-stage reaction system comprising a CSTR fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 115 ± 5°C. The product from the second-stage reactor overflowed continuously through a pressure regulator designed to control the pressure in each stage at 45 psig. The product, i.e. the PMPO, then passed through a cooler and into a collection vessel. The crude product was vacuum stripped to remove volatiles. The wt. % total polymer in the product was calculated from the concentrations of residual monomers measured in the crude PMPO before stripping. In Table 2:
PMPO 1 is an inventive example and is a 24.5% solids PMPO using Polyol 2 (72.7% EO cap), PFS, and AIBN initiator. The resulting PMPO had a multimodal particle size distribution as shown in Figure 1;
PMPO 2 is an inventive example and is a 24.4% solids PMPO using Polyol 2 (72.7% EO cap), PFS, and peroxide initiator. The resulting PMPO had a multimodal particle size distribution as shown in Figure 1;
PMPO 3 is an inventive example and is a 33.7% solids PMPO using Polyol 2 (72.7% EO cap), PFS, and peroxide initiator. The resulting PMPO had a multimodal particle size distribution as shown in Figure 1;
PMPO 4 is a comparative example and is a 24.3% solids PMPO using Polyol 2 (72.7% EO cap), no PFS, and AIBN initiator. The resulting PMPO did not have a multimodal particle size distribution as shown in Figure 1;
PMPO 5 is a comparative example and is a 25% solids PMPO using Polyol 3 (20% EO cap), no PFS, and AIBN initiator. The resulting PMPO did not have a multimodal particle size distribution as shown in Figure 2;
PMPO 6 is a comparative example and is a 20% solids PMPO using Polyol 3 (20% EO cap), PFS, and AIBN initiator. The resulting PMPO did not have a multimodal particle size distribution as shown in Figure 2;
PMPO 7 is a comparative example and is a 23.3% solids PMPO using Polyol 2 (72.7% EO cap), no PFS, macromer, added PCA (isopropanol), and AIBN initiator prepared according to a continuous procedure based on WO0059971. The resulting PMPO did not have a multimodal particle size distribution as shown in Figure 2.

**Table 2**

| **Component** | **PMPO 1** | **PMPO 2** | **PMPO 3** | **PMPO 4*** | **PMPO 5*** | **PMPO 6*** | **PMPO 7*** |
|---|---|---|---|---|---|---|---|
| Polyol | 2 | 2 | 2 | 2 | 3 | 3 | 2 |
| Base Polyol (wt. % in feed) | 65.4 | 65.4 | 56.0 | 74.0 | 74.0 | 69.6 | 65.44 |
| PFS (wt. % in feed) | 12.5 | 12.5 | 12.5 | 0 | --- | 12.5 | --- |
| Macromer (wt% in feed) | --- | --- | --- | --- | --- | --- | 3.0 |
| PCA (wt% in feed) | 7.5** | 7.5** | 7.5** | --- | --- | 7.5** | 7.5 |
| Styrene (wt. % in feed) | 8.3 | 8.3 | 12.0 | 10.1 | 10.1 | 6.5 | 9.33 |
| Acrylonitrile (wt. % in Feed) | 13.3 | 13.3 | 19.0 | 15.5 | 15.5 | 11.0 | 14.3 |
| Initiator 2 (wt. % in feed) | 0.48 | --- | --- | 0.45 | 0.45 | 0.32 | 0.42 |
| Initiator 3 (wt. % in feed) | --- | 0.29 | 0.29 | --- | --- | --- | --- |
| Initiator 4 (wt. % in feed) | --- | 0.02 | 0.02 | --- | --- | --- | --- |
| Total Polymer (wt. %) | 24.5 | 24.4 | 33.7 | 24.3 | 25.0 | 20.0 | 23.3 |
| Viscosity mPa.s @ 25°C | 5876 | 8272 | 13680 | 5649 | 2686 | 1970 | 7686 |
| Filterability - 150 mesh (%) | 100 | 100 | 100 | 100 | 100 | 100 | 100 |
| particle size (microns) | 0.65 | 0.64 | 1.12 | 1.63 | 1.16 | 0.44 | 0.29 |

| | | | | | | | |
|---|---|---|---|---|---|---|---|
| *comparative examples ** as component of PFS (60% by weight) | | | | | | | |

Dispersion Stability Test. Comparative PMPO 5 and Inventive PMPO 2 were each added to water (50g PMPO to 100g water), mixed, and allowed to stand at 25 °C for visual observation. Both PMPO 5 and PMPO 2 were single phase, but PMPO 5 had the appearance of an emulsion (i.e. tiny dispersed droplets) whereas PMPO 2 was smooth in appearance (i.e. no visible droplets). After 2 weeks, PMPO 5 had completely phase separated into water and PMPO phases, whereas PMPO 2 was a stable dispersion with only a single phase. PMPO 2 was still a single phase (stable dispersion) even after 5 weeks.

### Foam Examples 1-14

Flexible foams were produced using the formulations given in Table 3 and Table 4 (amounts are in parts by weight), in which:
POLYOL 4 refers to a polyether polyol prepared using 7.6% by weight EO and 92.4 % by PO as the alkylene oxide and 87.3% by weight glycerin and 12.7% by weight propylene glycol as OH functional starter, having a functionality of 2.8 and an OH number of 54-58 mg KOH/g polyol;
PMPO 1 refers to PMPO 1 described earlier in the PMPO Examples;
PMPO 4 refers to PMPO 4 described earlier in the PMPO Examples;
SURFACTANT 1: alkyl-pendant type organosilicone surfactant, commercially available as Niax^{™} silicone L-620 from Momentive Performance Materials, Inc.;
CATALYST 1: triethylenediamine catalyst, commercially available as Dabco^{™} 33LV from Evonik;
CATALYST 2 refers to bis(2-dimethylaminoethyl) ether, commercially available as Niax^{™} catalyst A-1 from Momentive Performance Materials; and
CATALYST 3 refers to stannous octoate-based catalyst, commercially available as Dabco^{™} T-9 from Evonik

Free-rise foams were produced in 14"x 14" x 6" (35.6cm x 35.6cm x 15.2cm) cake boxes using a standardized bench mixing process at 2400 rpm. All materials were maintained in a climate controlled environment prior to and during the foaming process. Processing characteristics were monitored for five minutes, including rise profiles versus time, cell opening time (gas blow off), and percent settle (sigh back). After five minutes, the foams were cured for an additional five minutes in a curing oven at 120°C. Any signs of shrinkage during cure were noted. A 12" x 12" x 4" (30.5cm x 30.5cm x 10.2cm) block was cut from the center of each bun and the samples were roller crushed 3 times to a minimum thickness of about 0.5 inches (1.3cm). These samples were conditioned according to ASTM D3574-11 standard. In Table 3, Examples 1 and 5-7 are comparative examples and Examples 2-4 are inventive examples. In Table 4, Examples 8 and 12-14 are comparative examples and Examples 9-11 are inventive examples.

**Table 3**

| Example | 1 | 2 | 3 | 4 | 5 | 6 | 7 |
|---|---|---|---|---|---|---|---|
| POLYOL 2 | 75 | 65 | 55 | 45 | 75 | 65 | 55 |
| POLYOL 4 | 25 | 25 | 25 | 25 | 25 | 25 | 25 |
| PMPO 1 | --- | 10 | 20 | 30 | --- | --- | --- |
| PMPO 4 | --- | --- | --- | --- | --- | 10 | 20 |
| Water (distilled) | 2.0 | 2.0 | 2.0 | 2.0 | 2.0 | 2.0 | 2.0 |
| SURFACTANT 1 | 1.5 | 1.5 | 1.5 | 1.5 | 1.5 | 1.5 | 1.5 |
| Antioxidant | 0.3 | 0.3 | 0.3 | 0.3 | 0.3 | 0.3 | 0.3 |
| CATALYST 2 | 0.05 | 0.05 | 0.05 | 0.05 | 0.05 | 0.05 | 0.05 |
| CATALYST 1 | 0.29 | 0.29 | 0.29 | 0.29 | 0.29 | 0.29 | 0.29 |
| CATALYST 3 | 0.04 | 0.04 | 0.04 | 0.04 | 0.04 | 0.04 | 0.04 |
| INDEX (100 A/B) | 95 | 95 | 95 | 95 | 95 | 95 | 95 |
| % poly(oxyethylene) content | 55.3 | 53.5 | 51.7 | 49.9 | 55.3 | 53.5 | 51.7 |
| % Solid Polymer Particles | 0 | 2.5 | 5 | 7.5 | 0 | 2.5 | 5 |
| Density lb/ft³ (kg/m³) | 2.76 (44.2) | 2.72 (43.6) | 2.79 (44.7) | 2.79 (44.6) | 2.76 (44.2) | 2.79 (44.6) | 2.77 (44.4) |
| Airflow ft³/min (L/s) | 8.6 (4.1) | 9.0 (4.2) | 8.6 (4.1) | 8.4 (4.0) | 8.6 (4.1) | 8.5 (4.0) | 8.4 (4.0) |
| IFD 25% lb/50in² (N/323cm²) | 20.8 (92.7) | 26.4 (117.6) | 29.5 (131.1) | 32.2 (143.1) | 20.8 (92.7) | 21.7 (96.4) | 22.3 (99.4) |
| IFD 65% lb/50in² (N/323cm²) | 42.8 (190.2) | 51.6 (229.4) | 58.1 (258.6) | 63.4 (282.2) | 42.8 (190.2) | 44.9 (199.7) | 46.9 (208.5) |
| IFD 25% Return lb/50in² (N/323cm²) | 17.7 (78.8) | 22.0 (97.8) | 24.5 (109.2) | 26.4 (117.5) | 17.7 (78.8) | 18.3 (81.4) | 18.9 (84.0) |
| Return Val. @ 25% % | 85.1 | 83.2 | 83.3 | 82.1 | 85.1 | 84.4 | 84.6 |
| S.F. 65% / 25% | 2.1 | 2.0 | 2.0 | 2.0 | 2.1 | 2.1 | 2.1 |
| Tensile Strength psi (kPa) | 9 (64) | 9 (61) | 11 (73) | 11 (76) | 9 (64) | 11 (78) | 12 (85) |
| Elongation % | 249 | 178 | 184 | 169 | 249 | 258 | 255 |
| Tear Strength (20"/MIN-STDSP1) pli (N/m) | 2.3 (406) | 2.0 (351) | 1.7 (304) | 1.8 (318) | 2.3 (406) | 2.0 (357) | 2.1 (372) |
| 50% Compression Set % | 1.9 | 2.0 | 2.0 | 2.2 | 1.9 | 1.7 | 2.1 |
| 90% Compression Set % | 2.4 | 2.7 | 3.7 | 4.5 | 2.4 | 2.9 | 2.7 |
| HACS 75% % | 5.4 | 5.0 | 4.5 | 4.5 | 5.4 | 4.8 | 5.2 |
| Resilience % | 52 | 52 | 53 | 50 | 52 | 52 | 50 |

**Table 4**

| Example | 8 | 9 | 10 | 11 | 12 | 13 | 14 |
|---|---|---|---|---|---|---|---|
| POLYOL 2 | 75 | 65 | 55 | 45 | 75 | 65 | 45 |
| POLYOL 4 | 25 | 25 | 25 | 25 | 25 | 25 | 25 |
| PMPO 1 | | 10 | 20 | 30 | | | |
| PMPO 4 | | | | | | 10 | 30 |
| Water (distilled) | 4.3 | 4.3 | 4.3 | 4.3 | 4.3 | 4.3 | 4.3 |
| SURFACTANT 1 | 1.6 | 1.6 | 1.6 | 1.6 | 1.6 | 1.6 | 1.6 |
| Antioxidant | 0.3 | 0.3 | 0.3 | 0.3 | 0.3 | 0.3 | 0.3 |
| CATALYST 1 | 0.28 | 0.28 | 0.28 | 0.28 | 0.28 | 0.28 | 0.28 |
| INDEX (100 A/B) | 95 | 95 | 95 | 95 | 95 | 95 | 95 |
| % poly(oxyethylene) content | 55.3 | 53.5 | 51.7 | 49.9 | 55.3 | 53.5 | 49.9 |
| % Solid Polymer Particles | 0 | 2.5 | 5 | 7.5 | 0 | 2.5 | 7.5 |
| Density lb/ft³ (kg/m³) | 1.32 (21.1) | 1.37 (22.0) | 1.37 (21.9) | 1.39 (22.2) | 1.32 (21.1) | 1.36 (21.7) | 1.38 (22.0) |
| Airflow ft³/min (L/s) | >10 (>4.7) | >10 (>4.7) | >10 (>4.7) | >10 (>4,7) | >10 (>4.7) | >10 (4.7) | >10 (4.7) |
| IFD 25% lb/50in² (N/323cm²) | 8.3 (36.7) | 10.2 (45.3) | 11.4 (50.7) | 12.7 (56.6) | 8.3 (36.7) | 7.9 (35.2) | 9.2 (40.7) |
| IFD 65% lb/50in² (N/323cm²) | 16.7 (74.4) | 20.5 (91.0) | 23.3 (103.6) | 26.5 (118.1) | 16.7 (74.4) | 16.2 (71.9) | 18.8 (83.4) |
| IFD 25% Return lb/50in² (N/323cm²) | 6.6 (29.1) | 7.9 (35.2) | 8.6 (38.4) | 9.4 (41.6) | 6.6 (29.1) | 6.2 (27.7) | 6.9 (30.7) |
| Return Val. @ 25% % | 79.4 | 77.6 | 75.7 | 73.5 | 79.4 | 78.0 | 75.3 |
| S.F. 65% / 25% | 2.0 | 2.0 | 2.0 | 2.1 | 2.0 | 2.0 | 2.0 |
| Tensile Strength psi (kPa) | 10 (68) | 6 (39) | 6 (41) | 7 (45) | 10 (68) | 9 (65) | 11 (78) |
| Elongation % | 264 | 126 | 122 | 113 | 264 | 231 | 231 |
| Tear Strength (20"/MIN-STDSP1) | 2.1 (364) | 1.2 (204) | 1.1 (186) | 1.1 (199) | 2.1 (364) | 1.8 (309) | 1.8 (331) |
| pli (N/m) | | | | | | | |
| 50% Compression Set % | 4.4 | 4.2 | 5.2 | 5.9 | 4.4 | 6.8 | 9.1 |
| 90% Compression Set % | 5.6 | 6.1 | 6.1 | 7.5 | 5.6 | 7.3 | 9.8 |
| HACS 75% % | 7.1 | 7.8 | 10.6 | 11.6 | 7.1 | 13.1 | 13.7 |
| Resilience % | 39 | 35 | 33 | 33 | 39 | 39 | 37 |

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A filled polyol comprising:
(a) a carrier polyol comprises a polyether polyol having a functionality of 2 to 6, an OH number of 20 to 120 mg KOH/g, and a poly(oxyethylene) content of at least 60% by weight, based on total weight of the polyether polyol, and
(b) polymer particles dispersed in the carrier polyol,
wherein the polymer particles exhibit a multimodal particle size distribution and the filled polyol has a solids content of 5% to 34% by weight, based on total weight of the filled polyol.

2. The filled polyol of claim 1, wherein the filled polyol comprises a polymer polyol (PMPO) wherein the polymer particles comprise a free radical polymerization reaction product of an ethylenically unsaturated monomer comprising styrene and acrylonitrile, in which the weight ratio of styrene to acrylonitrile (S:AN) is within the range of 75:25 to 25:75.

3. The filled polyol of claim 1 or claim 2, wherein the carrier polyol has a functionality of 2 to 4, an OH number of 20 to 50 mg KOH/g, and a poly(oxyethylene) content of 60% to 90% by weight, based on the total weight of the polyether polyol.

4. The filled polyol of one of claim 1 to claim 3, wherein the polyether polyol comprises an ethylene oxide cap, wherein the ethylene oxide cap is present in an amount sufficient to provide a polyether polyol having a poly(oxyethylene) content of at least 60% by weight, based on the total weight of the polyether polyol.

5. The filled polyol of one of claim 1 to claim 4, wherein the polyether polyol having a functionality of 2 to 6, an OH number of 20 to 120 mg KOH/g, and a poly(oxyethylene) content of at least 60% by weight, based on total weight of the polyether polyol, is present in an amount of at least 50% by weight, at least 90% by weight or 100% by weight, based on the total weight of carrier polyol.

6. The filled polyol of claim 2, wherein the filled polyol further comprises a preformed stabilizer comprising a reaction product of a reaction mixture comprising (1) an ethylenically unsaturated macromer, (2) an ethylenically unsaturated monomer, (3) a free radical initiator, (4) a polymer control agent, and optionally (5) a diluent.

7. The filled polyol of one of claim 1 to claim 6, wherein the filled polyol has a particle size distribution curve comprising a first peak at a particle size of no more than 1 micron and a second peak at a particle size of more than 1 micron, such as more than 1 to 5 micron, wherein the particles having a particle size falling within the first peak is at least 50% by volume and the particles having a particle size falling within the second peak is no more than 50% by volume, based on the total volume of particles in the filled polyol.

8. The filled polyol of claim 7, wherein the first peak is at a particle size of 0.2 to 0.8 micron and the second peak is at a particle size of no more than 5 micron.

9. The filled polyol of one of claim 1 to claim 8, wherein the filled polyol has a solids content of 10% to 30% by weight, based on total weight of the filled polyol.

10. A process for preparing a polymer polyol (PMPO), comprising:
(a) continuously introducing components comprising (i) a carrier polyol, (ii) an ethylenically unsaturated monomer, (iii) a radical initiator, and (iv) a preformed stabilizer into a continuous reactor, and
(b) continuously removing the PMPO from the continuous reactor, wherein
(1) the carrier polyol comprises a polyether polyol having a functionality of 2 to 6, an OH number of 20 to 120 mg KOH/g, and a poly(oxyethylene) content of at least 60% by weight, based on total weight of the polyether polyol, and
(2) the preformed stabilizer comprises a reaction product of a reaction mixture comprising (i) an ethylenically unsaturated macromer, (ii) an ethylenically unsaturated monomer, (iii) a free radical initiator, (iv) a polymer control agent, and optionally (v) a diluent.

11. The process of claim 10, wherein the polyether polyol has a functionality of 2 to 4, an OH number of 20 to 50 mg KOH/g, and a poly(oxyethylene) content of 60 to 90% by weight, based on the total weight of the polyether polyol.

12. The process of claim 10 or claim 11, wherein the polyether polyol having a functionality of 2 to 6, an OH number of 20 to 120 mg KOH/g, and a poly(oxyethylene) content of at least 60% by weight, based on total weight of the polyether polyol, is present in an amount of at least 50% by weight or at least 90% by weight, based on the total weight of carrier polyol.

13. The process of one of claim 10 to claim 12, comprising:
(1) providing a heterogeneous mixture of preformed stabilizer and, optionally, a chain transfer agent, in combination with carrier polyol, ethylenically unsaturated monomer, and free radical initiator,
(2) introducing the heterogeneous mixture to a reaction zone maintained at a temperature sufficient to initiate a free radical reaction, and under sufficient pressure to maintain only liquid phases in the reaction zone,
(3) maintaining the heterogeneous mixture in the reaction zone for a period of time sufficient to react at least a major portion of the ethylenically unsaturated monomer to form a heterogeneous mixture containing enhanced PMPO, unreacted monomers and chain transfer agent, and
(4) stripping the unreacted monomers and diluent from the enhanced PMPO to recover the unreacted monomers and diluent.

14. The process of one of claim 10 to claim 13, wherein the PMPO exhibits a multimodal particle size distribution having a particle size distribution curve comprising a first peak at a particle size 0.2 to 0.8 micron and a second peak at a particle size of no more than 5 micron.

15. The process of claim 14, wherein the volume fraction of particles having a particle size falling within the first peak is at least 50% by volume and the volume fraction of particles having a particle size falling within the second peak is no more than 50% by volume, based on the total volume of particles.
